(19) Europäisches Patentamt
European Patent Office
Office européen des brevets

(11) EP 3 274 085 B1

(12) **EUROPEAN PATENT SPECIFICATION**

(45) Date of publication and mention of the grant of the patent:
**15.06.2022 Bulletin 2022/24**

(21) Application number: **16724477.1**

(22) Date of filing: **24.03.2016**

(51) International Patent Classification (IPC):
***B01J 20/12*** *(2006.01)* ***B01J 20/26*** *(2006.01)*
***C02F 1/00*** *(2006.01)* *C02F 1/28* *(2006.01)*

(52) Cooperative Patent Classification (CPC):
**B01J 20/264; B01J 20/12; B01J 20/261; C02F 1/288;** B01J 2220/46; C02F 1/281; C02F 1/285; C02F 2101/305; C02F 2101/306; C02F 2101/32; C02F 2101/327; C02F 2101/36; C02F 2101/38; C02F 2101/40; C02F 2103/343

(86) International application number:
**PCT/IL2016/050322**

(87) International publication number:
**WO 2016/151592 (29.09.2016 Gazette 2016/39)**

(54) **HYBRID SORBENT COMPOSITES COMPRISING MINERAL CLAY FOR REMOVAL OF ORGANIC-BASED MATERIALS**

HYBRIDE SORPTIONSMITTEL-VERBUNDSTOFFE MIT MINERALISCHEM TON ZUR ENTFERNUNG VON STOFFEN AUF ORGANISCHER BASIS

COMPOSITES SORBANTS HYBRIDES COMPRENANT DE L'ARGILE MINÉRALE POUR L'ÉLIMINATION DE MATÉRIAUX À BASE ORGANIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.03.2015 US 201562137896 P**

(43) Date of publication of application:
**31.01.2018 Bulletin 2018/05**

(73) Proprietor: **Yissum Research Development Company of the Hebrew University of Jerusalem Ltd.**
**91390 Jerusalem (IL)**

(72) Inventors:
- **MISHAEL, Yael**
  **7628603 Rehovot (IL)**
- **SHABTAI, Itamar**
  **4059100 Beit Yehoshua (IL)**
- **KOHAY, Hagay**
  **9986000 Moshav Aviezer (IL)**
- **IZBITSKI, Avital**
  **7318800 Moshav Shilat (IL)**
- **LEVY, Lior**
  **85315 Kibbutz Mishmar Hanegev (IL)**

(74) Representative: **Boult Wade Tennant LLP**
**Salisbury Square House**
**8 Salisbury Square**
**London EC4Y 8AP (GB)**

(56) References cited:
**US-A1- 2010 216 908**

- **SAHINER NURETTIN ET AL: "The generation of desired functional groups on poly(4-vinyl pyridine) particles by post-modification technique for antimicrobial and environmental applications", JOURNAL OF COLLOID AND INTERFACE SCIENCE, ACADEMIC PRESS, NEW YORK, NY, US, vol. 402, 3 April 2013 (2013-04-03), pages 327-333, XP028564148, ISSN: 0021-9797, DOI: 10.1016/J.JCIS.2013.03.032**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



(Cont. next page)

- **ADI RADIAN ET AL: "Effect of Humic Acid on Pyrene Removal from Water by Polycation-Clay Mineral Composites and Activated Carbon", ENVIRONMENTAL SCIENCE & TECHNOLOGY, vol. 46, no. 11, 30 April 2012 (2012-04-30), pages 6228-6235, XP055286656, US ISSN: 0013-936X, DOI: 10.1021/es300964d**
- **NURETTIN SAHINER ET AL: "Soft hydrogel particles with high functional value", COLLOIDS AND SURFACES. A, PHYSICACHEMICAL AND ENGINEERING ASPECTS, vol. 381, no. 1-3, 8 April 2011 (2011-04-08), pages 74-84, XP055286845, NL ISSN: 0927-7757, DOI: 10.1016/j.colsurfa.2011.03.038**


Remarks:

The file contains technical information submitted after the application was filed and not included in this specification

## Description

This application claims the benefit of priority from US Provisional Patent Application No. 62/137,896 filed on March 25, 2015.

### FIELD OF THE INVENTION

The present invention, in some embodiments thereof, relates, *inter alia,* to clay composites having sorbent properties, and uses thereof for removal of organic-based materials from aqueous solutions.

### BACKGROUND OF THE INVENTION

The presence of micro- and nano- concentrations of organic-based contaminants, such as pharmaceuticals in aquatic environments has drawn significant attention in the past few decades. The efficiency of removing these compounds by water treatment processes depends on many parameters including the setup of the treatment plant, water composition and the characteristics of the pharmaceutical compounds.

Reviews on the efficiency of removing pharmaceuticals by water treatment plants indicate that many of these compounds are resistant to the degradation and removal processes and therefore are present in the treated effluent. Reusing the effluent for crop irrigation or discharging it to surface waters has raised environmental and health concerns which are currently investigated.

To improve the removal of organic pollutants, including but not limited to, pharmaceutical compounds (e.g., diclofenac), advanced treatment processes were proposed, such as sorption by granular active carbon (GAC). However, the presence of dissolved organic matter (DOM) in the effluent in many cases reduces the efficiency of GAC to remove target organic pollutants.

Sahiner Nurettin et al. discloses the generation of desired functional groups on poly(4-vinyl pyridine) particles by post-modification technique for antimicrobial and environmental applications in the Journal of Colloid and Interface Science, Academic Press, New York, NY, US, vol. 402, pages 327-333. US 2010/216908 relates to antimicrobial polymer nanocomposites. Adi Radian et al. discloses the effect of humic acid on pyrene removal from water by polycation-clay mineral composites and activated carbon in Environmental Science & Technology, vol. 46, no. 11, pages 6228-6235. Sahiner Nurettin et al. discloses soft hydrogel particles with high functional value in Colloids and Surfaces A, Physicachemical and Engineering Aspects, vol. 381, no. 1-3, pages 74-84.

There is an unmet need for composites having high removal efficiency of organic-based materials from an aqueous solution.

### SUMMARY OF THE INVENTION

The present invention, in some embodiments thereof, relates, *inter alia,* to clay composites comprising same having sorbent properties. In additional embodiments, there is provided a method of removing organic-based materials from aqueous solutions using the clay composites of the invention.

According to one aspect, there is provided a composite according to claim 1.

In some embodiments, the clay is a phyllosilicate selected from the group consisting of illite, sepiolite, attapulgite, hectorite, bentonite, zeolite, aluminosilicate, smectite, and kaolinite.

In some embodiments, the clay is MMT. In some embodiments, the MNT is bentonite.

In some embodiments, the clay is characterized as being positively charged. According to a non-claimed aspect, there is provided a composition-of-matter comprising the composite.

According to another non-claimed aspect, there is provided an article comprising the composite or the composition-of-matter. In some aspects, the article is selected from the group consisting of an organic waste processing device, a filtering device, a fluidic device, a liquid system (e.g., a container, a filter, a tube, and a pipe), tubing, an agricultural device, a package, a sealing article, a fuel container and a construction element and a medical device. In some aspects, the liquid system is for containing, disposing, transporting and/or treating organic waste.

According to the invention, there is provided a method of removal of organic-based materials from an aqueous solution, the method comprising incorporating the composite of the invention, within a filtering system or filter housing, and contacting the aqueous solution with the filtering system or filter housing.

In some embodiments, the organic-based materials are selected from the group consisting of: petroleum, organic acids, ketones, aldehydes, aromatic components including phenols, organic materials containing heteroatoms, dyes, polymeric materials, proteins, fatty acids and mixtures thereof, cyanide, hydrazine, organic insecticides, herbicides, and sewage contamination. In some embodiments, the one or more organic-based materials is a pharmaceutical composition. In some embodiments, the pharmaceutical composition is selected from the group consisting of diclofenac

(DCF) and gemfibrozil. In some embodiments, the organic-based materials are anionic materials.

In some embodiments, the method is aimed at specifically targeting and/or removing one or more organic-based materials from the aqueous solution. In some embodiments, the method is substantially unaffected by the presence of dissolved organic matters other than the organic-based materials being specifically targeted or removed.

## BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:

**FIG. 1** presents a schematic illustration of some aspects not according to the present invention invention: the quarternized poly-vinylpyridine-co-styrene (QPVPcS) loading on the Montmorillonite (MMT) composite and use of same for the adsorption of the diclofenac (DFC).

**FIG. 2** presents comparative point graphs showing H-poly-vinylpyridine-co-styrene (HPVPcS) and quarternized poly-vinylpyridine-co-styrene (QPVPcS) (0.4-0.13 mM) adsorption on montmorillonite (MMT; 1.7 gr/l) and Zeta potential of the corresponding composites.

**FIG. 3** presents Fourier transform infrared spectroscopy (FTIR) spectra (1400-1800 $cm^{-1}$) of QPVPcS and of QPVPcS "LOW" and "HIGH" composites, as described hereinbelow.

**FIG. 4** presents X-ray diffractions (XRD) of MMT and QPVPcS "LOW" and "HIGH" composites, as described hereinbelow.

**FIG. 5** presents differential thermogravimetric analysis profile of "LOW" and "HIGH" QPVPcS composites before and after washing thereof with tap water, as described hereinbelow.

**FIG. 6** presents a schematic illustration of the conformations of QPVPcS composites at low and high loading.

**FIG. 7** presents comparative point graphs showing the kinetics of DCF (2 mg/L) removal by granulated activated carbon (GAC) and by QPVP-MMT (0.1 g/L).

**FIG. 8** is a point graph presenting the adsorption profile of DCF (30 mg/L) on QPVPcS composites (0-0.83 mmol/g MMT).

**FIG. 9** presents comparative point graphs demonstrating the adsorption profile of DCF (1 mg/L) on poly-diallyl-dimethyl-ammonium-chloride (PD), QPVPcS and PVPcS composites (0.15± 0.01 gr polymer per gr MMT) as a function of NaCl concentration (0-100 Mm).

**FIG. 10** presents comparative point graphs showing the adsorption isotherms of DFC (1-200 mg/L) on QPVPcS composite (0.63 mmol/g) and on GAC (1.9 g/L).

**FIG. 11** presents comparative point graphs showing the kinetics of DFC (2 mg/L) adsorption on QPVPcS composite (0.63 mmol/g) and on GAC (0.55 g/L).

**FIG. 12** presents comparative point graphs showing DFC (1 mg/L) removal by columns (at different pore volumes) of PVPcS and QPVPcS composites (0.15± 0.01 gr polymer per gr MMT) and GAC mixed with sand (1/100); flow rate is 2 mL/min.

**FIG. 13** presents comparative point graphs demonstrating the effect of humic acid (HA; 5 mg/L) on DCF (1 mg/L) removal by columns of GAC (left panel, designated as "a") and QPVPcS composites (0.63mmol/g) (right panel, designated as "b"), flow rate 2.3 ml/min. standard deviations were 0.1-6.3% and 0-8.1% for GAC and QPVPcS composite, respectively.

**FIGs. 14A**-B presents graphs showing the QPVPcS adsorption: on MMT clay as a function of ionic strength dictated by the concentration of NaCl **(FIG. 14A),** and on pre-washed columns packed with QPVPcS polymer prepared from distilled water (DW), 0.01 and 1 M NaCl solutions **(FIG. 14B).**

**FIG. 15** presents comparative graphs showing % removal of dissolved organic matter (DOM, 25 ppm) from wastewater effluent, by filtration performed by sand, QPVPcoS-MMT composites and different kinds of GAC columns (charcoal, "Dutch", "Nurit"); Composite/sand ratio is 1:20 and the flow rate : 2 mL/min.

**FIG. 16** presents comparative point graphs of % removal of DOM from treated wastewater (sewage water) effluent "Shafdan", following filtration by columns of GAC (Nurit) and QPVPcoS-MMT composites prepared from DW, 0.01 M and 0.1 M NaCl solutions; Composite/sand ratio is 1:100, and the flow rate is 1.6 ml/min.

**FIG. 17** presents graphs showing the gemfibrozil (1 ppm) adsorption (%) by OHPVP- MMT and QPVP-MMT composites (1.7 g clay/L).

**FIG. 18** presents graphs showing the removal of EfOM (12.2 mg/L DOC; left panel) and HA (3 mg/L DOC; right panel) by QPVP-MMT composites as a function of QPVP loading and composite zeta potential.

**FIGs. 19A**-B present graphs showing the filtration of: EfOM (12.2 mg/L DOC) **(FIG. 19A),** and HA (3 mg/L DOC) by Low QPVP-, QPVP 0 M-, QPVP 0.01 M- QPVP 1 M-MMT composites and GAC columns **(FIG. 19B).**

**FIGs. 20A**-B present graphs showing the Filtration of EfOM **(FIG. 20A)** and HA by of QPVP 0 M-, QPVP 0.01 M- and QPVP 1 M-MMT composite columns normalized to polycation loading (mg DOC/g QPVP) **(FIG. 20B).**

**FIGs. 21A**-C present bar graphs showing the removal of diclofenac (30 mg/L) **(FIG. 21A),** gemfibrozil (17 mg/L) **(FIG. 21B)** and ibuprofen (15 mg/L) by QPVP 0 M-and 1 M-MMT composites from tap water (TW; left bar in each graph) and Shafdan effluent (EfOM; right bar in each graph) **(FIG. 21C).** Values above arrows represent decrease in micropollutant removal between TW and EfOM for each composite.

**FIG. 22** presents a graph showing the filtration of EfOM (12.2 mg/L DOC) by columns of QPVP 0M-MMT composite, two GACs and Shafdan soil.

**FIGs. 23A**-B show the adsorption isotherms of: gemfibrozil (GFZ; 1-17 ppm) on OHPVP-MMT composites (FIG. 23A), and GFZ and diclofenac (1-17 ppm) on OHPVP (100)-MMT composite (as described below) 0.14g polymer/g; 0.83 g/l) (FIG. 23B).

**FIG. 24** presents a graph showing the kinetics of GFZ (1ppm) adsorption by OHPVP(50) composite (as described below) (0.14 g/g) and by GAC (1.67 g/l).

## DETAILED DESCRIPTION OF THE INVENTION

The present invention, in some embodiments thereof, relates to clay composites having sorbent properties, and to uses thereof for removal organic-based materials from aqueous solutions.

Before explaining at least one embodiment of the invention in detail, it is to be understood that the invention is not necessarily limited in its application to the details set forth in the following description or exemplified by the Examples. The invention is defined by the appended claims.

As discussed hereinabove, efficient removal of organic-based pollutants (e.g., pharmaceuticals) by water treatment plants is a difficult task to achieve because many of these compounds are resistant to the degradation and removal processes.

While conceiving the present invention, the present inventors have considered a use of composites comprising specific compounds and clay (e.g., montmorillonite) for removal organic-based materials from aqueous solutions.

In some embodiments, m has a value of e.g., at least 6, at least 7, at least 8, at least 9, at least 10, at least 11, at least 12, at least 13, at least 14, at least 15, at least 16, at least 17, at least 18, at least 19, or at least 20.

Hereinthroughout, the term "monometric unit" refers to the repeat units, derived from the corresponding monomer. The polymer comprises the monomeric units. By "derived from" it is meant to refer to the compound following the polymerization process.

Herein, the term "monomer" refers to a molecule that may bind chemically to other molecules to form a polymer.

As used herein, the term "unsubstituted (or non-substituted)" describes a linear or branched, saturated or unsaturated hydrocarbon, as defined herein, that has no atoms other than hydrogen and carbon atoms.

As used herein, the term "substituted" relates to one or more of the hydrogen atoms being substituted by another chemical moiety or group.

Optional substituents in the context of embodiments of the present invention include, but are not limited to, alkyls, cycloalkyls and aryls (forming branched hydrocarbons), each optionally being substituted, halides, amines, carboxylates, amides, carbamates, nitro, cyano, azide, hydroxyl, thiols, alkoxy, thioalkoxy, aryloxy, thioaryloxy, sulfonates, phosphonates, hydrazines, sulfonamides, etc., as defined herein.

In the present invention the compound has the following formula I3 (also referred to as "OH(100)PVP"):

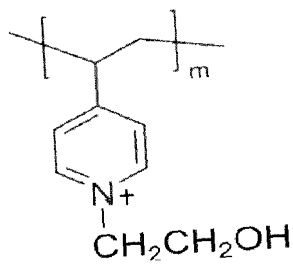

As used herein, the term "composite" refers to a structure made from two or more constituent materials that remain distinct while forming a single product (e.g., particle) such that the resulting product has different and/or improved physical properties.

The term "clay", as used herein, refers to the group consisting of: mineral clays, synthetic clays, organoclays

and any mixture(s) thereof.

In the present invention the clay is a mineral clay.

As used herein, the term "mineral clay" refers to a naturally occurring or synthetic material composed primarily of fine-grained minerals (e.g., silicates) that show plasticity through a variable range of water content (which may be a result of water trapped in the structure by polar attraction) and can be hardened when dried and/or fired.

Exemplary mineral clays include, but are not limited to, illite, phyllosilicate, Montmorillonite, kaolinite, illite, sepiolite, attapulgite, hectoritebentonite, zeolite, aluminosilicate, montmorillonite (MMT), smectite, and kaolinite.

In exemplary embodiments of the present invention the clay is Montmorillonite (e.g., bentonite, macaloid, or any combination, derivative or analogue thereof).

As used herein, the term "organoclay" and the term "modified clay" refer to an organically modified phyllosilicate, derived from a naturally occurring clay mineral. By exchanging the original interlayer cations for organocations (typically quaternary alkylammonium ions) or polysaccharides, an organophilic surface is generated, consisting of covalently linked organic moieties. The lamellar structure remains analogous to the parent phyllosilicate.

In some embodiments, the compound may be adsorbed to the external surface of the clay (e.g., MMT). In some embodiments, the compound may be adsorbed to the internal surface of the clay (e.g., MMT).

In some embodiments, the composite may comprise low loading (referred to as "LOW") of the compound, i.e. concentration of up to about 0.5 mmol of compound per 1 gram of clay.

In some embodiments, the composite may comprise high loading (referred to as "HIGH") of the compound, i.e. concentration of more than about 0.5 mmol of compound per 1 gram of clay.

As well understood in the art, segments of the adsorbed polymer are considered to belong one of three sequences; loops, tails and trains. Trains typically consist of groups of adjacent segments that are actually attached to the surfaces of the fine particles. Tails are typically the segments at the ends of the polymer that are not directly attached to the surfaces of the fine particles and extend out into the aqueous solution. Loops are typically intermediate sequences of segments, between trains and also extend into the aqueous solution.

Reference is now made to Figure 6, which shows schematic representation of QPVPcS composites (not according to the present invention) conformation al low and high loading, in the LOW composite, QPVPcS adsorbed to the external surface with high association with the clay, in a state that can be represented by trains. In this case polymer intercalation into the clay platelets is accompanied by water molecules. At high QPVPcoS loading the composite adsorbs at the clay surface as trains but also in a configuration of loops and tails.

In some embodiments, the hybrid sorbent is structurally based on the adsorption of any one of the compounds described herein to the clay (e.g., MMT). By "adsorption" it is meant herein to refer to interactions between the compound and the clay.

In some embodiments, the interactions are of non-covalent nature. By "non-covalent nature" it is meant to refer to interaction selected from: hydrophobic, van der Waals and electrostatic interactions, as well as hydrogen bonding.

In exemplary embodiments, the adsorption of the compound on the clay (e.g., MMT) is mediated *via* van der Waals and/or electrostatic interactions.

In some embodiments, the composite as described herein is positively charged.

By "positively charged" it is meant to refer to the polymeric backbone which contains chemical groups which carry, can carry, or can be modified so as to carry a positive charge such as, for example, and without limitation, ammonium, alkyl ammonium, dialkylammonium, trialkyl ammonium, and quaternary ammonium, as exemplified in any one of the embodiments mentioned hereinabove.

In some embodiments, the hybrid sorbent or the composition-of-matter comprising same remains substantially unaffected by the pH of the solution. For example, the hybrid sorbent or the composition-of-matter comprising same is positively charged at various values of pH, i.e. in e.g., pH 1, pH 2, pH 3, pH 4, pH 5, pH 6, pH 7, pH 8, pH 9, pH 10, pH 11, pH 12, pH 13, pH 14, including any value therebetween.

Methods of the determining a charge of compositions are known in the art.

Reference is now to Figure 2 herein; the charge of the composites described herein (i.e. PVPcS-MMT (not according to the present invention)), may be determined by measuring the Zeta potential of aqueous suspension of the composites in various values of pH, showing Zeta potential values of e.g., +40 mV, +50 mV, +60 mV, +70 mV, +80 mV, including any value therebetween, depending on the concentration of the composite.

In exemplary embodiments, the polymeric backbone comprises quaternary ammonium carrying a permanent positive charge.

### *Articles*

According to a non-claimed aspect there is provided an article (e.g., an article-of-manufacturing) incorporating in and/or on at least a portion thereof the composite described in any one of the respective embodiments hereinabove.

The article can be any article which can benefit from the composite or the composition-of-matter as described

herein for the removal or preventing of organic-based pollutant in aqueous solution.

Exemplary articles include, but are not limited to, organic waste processing device, fluidic device, an agricultural device, a package, a sealing article, a fuel container, water and/or cooling system device and a construction element.

Non-limiting examples of devices which can incorporate the hybrid or the composition-of-matter as described herein, beneficially, include tubing, pumps, drain or waste pipes, screw plates, and the like.

In some aspects, the article is an element used in water treatment systems (such as for containing, transporting, or treating aqueous media or water), devices, containers, filters, tubes, solutions and gases and the likes.

In some aspects, the article is an element in organic waste treatment systems (such as for containing, disposing, transporting, or treating organic waste), devices, containers, filters, tubes, chromatographic purification platforms (e.g., packed columns) and the likes.

Other exemplary aspects include, but are not limited to, containers, storage tanks, raw milk holding equipments, dairy processing operations conveyer belts, tube walls, gaskets, rubber seals, stainless steel coupons, piping systems, filling machine, silo tanks, heat exchangers, postpasteurization equipments, pumps, valves, separators, and spray devices.

***Contaminant Treating Applications:***

While studying the activity of the composite (i.e. hybrid sorbent) described hereinabove, the present inventors have surprisingly uncovered that such composite exhibit high affinity to organic-based components (e.g., contaminants).

Therefore, in one embodiment of the invention, there is provided a method of removal of organic-based materials from an aqueous solution comprises incorporating the composite within a filtering system or filter housing, and contacting the aqueous solution with the filtering system or filter housing so as to provide physical adsorption of contaminant component or components to the composite, to provide less environmentally deleterious or more environmentally acceptable aqueous-based materials, preferably in high yields. It is noteworthy that the composite as described hereinabove may be used at a concentration which does not provide substantial adverse environmental effects.

The term "physical adsorption" refers to adsorption process in which the adsorbate (e.g., contaminant component) is held by physical affinity. The term "physical affinity" in the sense of the present invention especially means and/or includes a process where the specific affinity of an organic-based component is immobilized within the hybrid sorbent by non-covalent force to thereby purify a crude solution.

In some embodiments, e.g., at least 10%, at least 20%, at least 30%, at least 40%, at least 50%, at least 60%, at least 70%, at least 80%, at least 90%, or even 100%, including any value therebetween, of the organic-based component remains immobilized within the hybrid sorbent following a washing treatment of the adsorbate.

In some embodiments, the physical adsorption is dominated by non-coloumbic bonds, such as, without being limited thereto, H-bonds, $\pi$-$\pi$ and hydrophobic interactions.

The present method is effective for treating one or more contaminant components, e.g., organic-based components, such as hydrocarbons, and/or organic-based components. Organic-based contaminant components which may be treated in the present method can include organic sulfur, in particular, non-thiophenic sulfur. Examples of organic-based and hydrocarbon-based contaminant components which may be processed in accordance with the present invention include, but are not limited to, petroleums (crude oils including topped crude oils), organic acids such as benzoic acid, ketones, aldehydes, aromatic components including phenols and the like, organic materials containing hetero atoms such as nitrogen, sulfur and halogen, e.g., chloride, and the like, dyes, polymeric materials, including, without limitation polymeric carbohydrate (e.g., polysaccharides), proteins, fatty acids and mixtures thereof. Other contaminants which may be treated in the present process include, for example, and without limitation, materials which are active components in or products of a manufacturing process, such as cyanide or hydrazine, or a process by-product, organic insecticides, herbicides, sewage contamination, aquatic animals excrete metabolites and pesticides resulting from soil leaching due to continuous water usage in agriculture, e.g., the production of fruits and vegetables particularly in arid to semi-arid climates.

In some embodiments, the organic-based component is a pharmaceutical composition or by-product thereof. The pharmaceutical composition may be combined with other chemical components including, but not limited to, physiologically carriers, excipients, lubricants, buffering agents, antibacterial agents, bulking agents (e.g., mannitol), antioxidants (e.g., ascorbic acid or sodium bisulfate), anti-inflammatory agents, anti-viral agents, chemotherapeutic agents, anti-histamines and the like.

In some embodiments, the organic-based component is an anionic material. As used herein and in the art, the term "anionic" describes the net negative charge of a material.

In exemplary embodiments, the pharmaceutical composition is diclofenac (DFC).

In additional exemplary embodiments, the pharmaceutical composition is gemfibrozil.

In some embodiments, the hereinabove mentioned method is aimed at specifically targeting and/or removing one or more organic-based materials from the aqueous solution. The specifically targeting is dictated by high affinity of

the hybrid to the specific organic-based materials. As exemplified in the Example section that follows, the presence of dissolved organic matter (designated as "DOM") (e.g., humic and fulvic acids) in the solution substantially does not reduce the efficiency of the hybrid to remove target organic pollutants such as DCF. The term DOM may refer to a variety of organic substances (leached from plant and soil matter. This aqueous phase organic matter is considered "dissolved" since it is able to pass through a filter (filters typically range in size between 0.7 and 0.22 um).

Hereinthroughout the organic-based materials may be in various concentrations in the solution thereof.

By "various concentrations" it is meant to refer to low concentrations (i.e. nano-concentrations that range from 1 nano gr/L to 100 nano gr/L) or higher concentration that ranges from at least 1$\mu$ gr/L to at least 100 $\mu$ gr/L).

As further exemplified hereinbelow, the hereinabove mentioned method is substantially unaffected by parameter of the aqueous solution, e.g., pH and the ionic strength. The term "ionic strength" (IS) refers to the total concentration of ions in a solution, and can be controlled e.g., by the concentration (e.g., 0.1-1 M) of the electrolyte (e.g., NaCl) in the solution.

As used herein, the term "substantially" refers to the complete or nearly complete extent or degree of an action, characteristic, property, state, structure, item, or result.

By "nearly complete" it is meant e.g., at least 70 %, at least 75%, at least 80 %, at least 75%, at least 80 %, at least 85%, at least 90 %, at least 95%, at least 99 %, or at least 99.9 %.

### *Polymer adsorption*

As discussed herein, the underlying methodology of embodiments of the present invention comprises the uses of adsorbed polymer.

Typically, as further described in details hereinbelow, clay suspension is added to the polymer solutions in tubes, caps or in plastic Eppendorfs.

In some embodiments, the clay-polymer suspensions is agitated for e.g., at least 30 min, at least 1 h, at least 2 h, at least 3 h, at least 4 h, and the supernatant is then separated. In some embodiments, the precipitates of the product are freeze-dried.

### *General:*

As used herein the term "about" refers to $\pm$ 10 %.

The terms "comprises", "comprising", "includes", "including", "having" and their conjugates mean "including but not limited to".

The term "consisting of means "including and limited to".

The term "consisting essentially of' means that the composition, method or structure may include additional ingredients, steps and/or parts, but only if the additional ingredients, steps and/or parts do not materially alter the basic and novel characteristics of the claimed composition, method or structure.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

As used herein the term "method" refers to manners, means, techniques and procedures for accomplishing a given task including, but not limited to, those manners, means, techniques and procedures either known to, or readily

developed from known manners, means, techniques and procedures by practitioners of the chemical, pharmacological, biological, biochemical and medical arts.

As used herein, the term "treating" includes abrogating, substantially inhibiting, slowing or reversing the progression of a condition, substantially ameliorating clinical or aesthetical symptoms of a condition or substantially preventing the appearance of clinical or aesthetical symptoms of a condition.

As used herein, the term "alkyl" describes an aliphatic hydrocarbon including straight chain and branched chain groups. Preferably, the alkyl group has 21 to 100 carbon atoms, and more preferably 21-50 carbon atoms. Whenever a numerical range; e.g., "21-100", is stated herein, it implies that the group, in this case the alkyl group, may contain 21 carbon atom, 22 carbon atoms, 23 carbon atoms, etc., up to and including 100 carbon atoms. In the context of the present invention, a "long alkyl" is an alkyl having at least 20 carbon atoms in its main chain (the longest path of continuous covalently attached atoms). A short alkyl therefore has 20 or less main-chain carbons. The alkyl can be substituted or unsubstituted, as defined herein

The term "alkyl", as used herein, also encompasses saturated or unsaturated hydrocarbon, hence this term further encompasses alkenyl and alkynyl.

The term "alkenyl" describes an unsaturated alkyl, as defined herein, having at least two carbon atoms and at least one carbon-carbon double bond. The alkenyl may be substituted or unsubstituted by one or more substituents, as described hereinabove.

The term "alkynyl", as defined herein, is an unsaturated alkyl having at least two carbon atoms and at least one carbon-carbon triple bond. The alkynyl may be substituted or unsubstituted by one or more substituents, as described hereinabove.

The term "cycloalkyl" describes an all-carbon monocyclic or fused ring (*i.e.,* rings which share an adjacent pair of carbon atoms) group where one or more of the rings does not have a completely conjugated pi-electron system. The cycloalkyl group may be substituted or unsubstituted, as indicated herein.

The term "aryl" describes an all-carbon monocyclic or fused-ring polycyclic (*i.e.,* rings which share adjacent pairs of carbon atoms) groups having a completely conjugated pi-electron system. The aryl group may be substituted or unsubstituted, as indicated herein.

The term "alkoxy" describes both an -O-alkyl and an -O-cycloalkyl group, as defined herein.

The term "aryloxy" describes an -O-aryl, as defined herein.

Each of the alkyl, cycloalkyl and aryl groups in the general formulas herein may be substituted by one or more substituents, whereby each substituent group can independently be, for example, halide, alkyl, alkoxy, cycloalkyl, alkoxy, nitro, amine, hydroxyl, thiol, thioalkoxy, thiohydroxy, carboxy, amide, aryl and aryloxy, depending on the substituted group and its position in the molecule. Additional substituents are also contemplated.

The term "halide", "halogen" or "halo" describes fluorine, chlorine, bromine or iodine.

The term "haloalkyl" describes an alkyl group as defined herein, further substituted by one or more halide(s).

The term "hydroxyl" or "hydroxy" describes a -OH group.

The term "thiohydroxy" or "thiol" describes a -SH group.

The term "thioalkoxy" describes both an -S-alkyl group, and a -S-cycloalkyl group, as defined herein.

The term "thioaryloxy" describes both an -S-aryl and a -S-heteroaryl group, as defined herein.

The term "amine" describes a -NR'R" group, with R' and R" as described herein.

The term "heteroaryl" describes a monocyclic or fused ring (*i.e.,* rings which share an adjacent pair of atoms) group having in the ring(s) one or more atoms, such as, for example, nitrogen, oxygen and sulfur and, in addition, having a completely conjugated pi-electron system. Examples, without limitation, of heteroaryl groups include pyrrole, furane, thiophene, imidazole, oxazole, thiazole, pyrazole, pyridine, pyrimidine, quinoline, isoquinoline and purine.

The term "heteroalicyclic" or "heterocyclyl" describes a monocyclic or fused ring group having in the ring(s) one or more atoms such as nitrogen, oxygen and sulfur. The rings may also have one or more double bonds. However, the rings do not have a completely conjugated pi-electron system. Representative examples are piperidine, piperazine, tetrahydrofurane, tetrahydropyrane, morpholino and the like.

The term "carboxy" or "carboxylate" describes a -C(=O)-OR' group, where R' is hydrogen, alkyl, cycloalkyl, alkenyl, aryl, heteroaryl (bonded through a ring carbon) or heteroalicyclic (bonded through a ring carbon) as defined herein.

The term "carbonyl" describes a -C(=O)-R' group, where R' is as defined hereinabove.

The above-terms also encompass thio-derivatives thereof (thiocarboxy and thiocarbonyl).

The term "thiocarbonyl" describes a -C(=S)-R' group, where R' is as defined hereinabove.

A "thiocarboxy" group describes a -C(=S)-OR' group, where R' is as defined herein.

A "sulfinyl" group describes an -S(=O)-R' group, where R' is as defined herein.

A "sulfonyl" or "sulfonate" group describes an $-S(=O)_2-R'$ group, where Rx is as defined herein.

A "carbamyl" or "carbamate" group describes an -OC(=O)-NR'R" group, where R' is as defined herein and R" is as defined for R'.

A "nitro" group refers to a $-NO_2$ group.

A "cyano" or "nitrile" group refers to a -C≡N group.

As used herein, the term "azide" refers to a $-N_3$ group.

The term "sulfonamide" refers to a $-S(=O)_2-NR'R''$ group, with R' and R" as defined herein.

The term "phosphonyl" or "phosphonate" describes an $-O-P(=O)(OR')_2$ group, with R' as defined hereinabove.

The term "phosphinyl" describes a -PR'R" group, with R' and R" as defined hereinabove.

The term "alkaryl" describes an alkyl, as defined herein, which substituted by an aryl, as described herein. An exemplary alkaryl is benzyl.

The term "heteroaryl" describes a monocyclic or fused ring (*i.e.,* rings which share an adjacent pair of atoms) group having in the ring(s) one or more atoms, such as, for example, nitrogen, oxygen and sulfur and, in addition, having a completely conjugated pi-electron system. Examples, without limitation, of heteroaryl groups include pyrrole, furane, thiophene, imidazole, oxazole, thiazole, pyrazole, pyridine, pyrimidine, quinoline, isoquinoline and purine. The heteroaryl group may be substituted or unsubstituted by one or more substituents, as described hereinabove. Representative examples are thiadiazole, pyridine, pyrrole, oxazole, indole, purine and the like.

As used herein, the terms "halo" and "halide", which are referred to herein interchangeably, describe an atom of a halogen, that is fluorine, chlorine, bromine or iodine, also referred to herein as fluoride, chloride, bromide and iodide.

The term "haloalkyl" describes an alkyl group as defined above, further substituted by one or more halide(s).

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Various embodiments and aspects of the present invention as delineated hereinabove and as claimed in the claims section below find experimental support in the following examples.

## EXAMPLES

Reference is now made to the following examples which, together with the above descriptions, illustrate the invention in a non limiting fashion.

### *EXAMPLE 1 (NOT ACCORDING TO THE PRESENT INVENTION)*

### *SAMPLE PREPARATION*

***Materials:***

Wyoming Na-montmorillonite SWy-2 (MMT) was obtained from the Source Clays Repository of the Clay Mineral Society (Columbia, MO); cation exchange capacity (CEC) and specific surface area were 76.4 meq/100 g and 756 $m^2/g$, respectively. Poly-4-vinylpiridine-co-styrene (PVPcS) (PVP:S ratio 9:1), poly-diallyl-dimethyl-ammonium-chloride (PD) (MW 400,000-500,000 Da), diclofenac (DCF), methyl iodide (95%) and humic acid (HA) sodium technical grade were purchased from Sigma Aldrich. Granular activated carbon (GAC) (Hydraffin 30N, 0.5-2.5 mm, 900 $m^2/g$) was purchased from Benchmark Ltd. (Israel). Quartz sand (grain size 0.8-1.5mm) was purchased from Shoshani & Weinstein (Israel).

***Sample Preparation***

***Polymers preparation****:* Quarternization of PVPcS was based on Ishizu, K. et al. Die Makromol. Chemie 1982, 183, 3099-3107 and http://www.polymersource.com/dataSheet/P3192-S4VPQ.pdf.

PVPcS was freeze-dried, solubilized in DMF for 24h and methyl iodide was added in excess (1.5 molar ratio). The reaction mixture was refluxed for 12h at 60°C and was washed thoroughly three times with hexane. The solvent was removed under reduced pressure and the sample was lyophilized.

The quarternization was characterized and verified by Fourier transform infrared (FTIR) and HNMR measurements (Bruker Avance II 500, in DMSO-d6 at 500.2MHz) as described hereinbelow.

HPVPcS solution was prepared in acidified distilled water (DDW) solution by adding pyridine stoichiometric concentrations of $H_2SO_4$ (95% purity). PD was dissolved in DDW; HPVPcS:

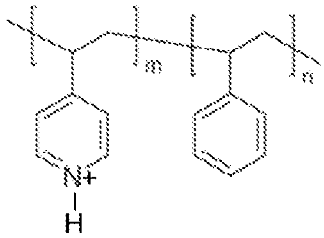

***Polymer adsorption:*** MMT clay suspension of 0.5% w/w (5 g/L) was added to QPVPcS (0.2-2.5 g/L), HPVPcS (0.2-2 g/L) or PD (1 g/L) solutions in Teflon tubes (50 mL) and caps or in plastic Eppendorfs (1.5 ml). The clay-polycation suspensions were agitated (for reaching equilibrium) using a shaker, suspensions were centrifuged (12000 g for 10 min, 18 °C) and supernatant separated. The precipitates were freeze-dried and polymer concentration in supernatant was measured using UV-Vis spectrophotometer at a wavelength of 223-226 and 249-256 nm for QPVPcS and HPVPcS, respectively, and polymer adsorption was calculated. Polymer adsorption to the clay was calculated by reducing the concentration measured in the supernatant from the added polymer concentration. For PD, the percentage of carbon was measured using a CHNSO analyzer (Thermo-Scientific, Fisons, EA1108) and the amount of polymer adsorbed was calculated accordingly.

***Results***

***Adsorption of QPVPcS and HPVPcS to Montmorillonite- A Comparative Study:*** The adsorption isotherms of HPVPcS and of QPVPcS to MMT present similar trends and consist of three stages: linear increase at low polymer concentrations, a plateau and increased adsorption at high polymer concentrations. The adsorption of HPVPcS, at all added concentrations, was higher than the adsorption of QPVPcS, reaching the cation exchange capacity (CEC) of the clay at the plateau region. On the other hand, QPVPcS adsorption reached the CEC only when very high concentrations of the polymer were added.

Without being bound by any particular theory, it is suggested that the high adsorption of HPVPcS to MMT can be attributed to the H-bonds formed between HPVPcS and the clay and between the polymer chains. However, such bonds are not relevant in the case of QPVPcS. In addition, the methyl group of QPVPcS may cause steric interference explaining its lower adsorption on the clay.

***EXAMPLE 2 (NOT ACCORDING TO THE PRESENT INVENTION) SAMPLE CHARACTERIZATION***

***Material and Methods***

***Zeta potential measurements***

Zeta potentials of MMT, QPVPcS and HPVPcS (0.5 g/L) were measured using a Zetasizer Nanosystem (Malvern Instruments, Southborough, MA. Zeta potential of the composites (0.43-0.83 and 0.69-1.2 mmol/g clay for QPVPcS and HPVPcS composites, respectively) was monitored using composites suspensions (0.17% MMT). Zeta potential of HPVPcS/PVPcS composites (0.8 mmol/g) was measured as a function of pH (3-8) by adding a concentrated NaOH solution to the composite suspension and reaching equilibrium.

***FTIR measurements***

FTIR spectra were obtained for QPVPcS and QPVPcS composites (0.43mmol/g and 0.83mmol/g). Pellets were prepared from dried polymer or composite mixed with KBr (2:98 ratio). FTIR spectra were recorded at room temperature in the range of 500-4000 $cm^{-1}$ using a FTIR spectrometer (Nicolet Magna-IR-550, Madiso WI).

***X-ray diffraction (XRD) measurements***

The basal (d 001) spacing of MMT and QPVPcS composite (0.43-0.83 mmol/g clay) were measured by XRD. On a round glass slide, 1-2 mL of the suspension (0.17% MMT) were placed and left to sediment (oriented sample) for one day. The basal spacing was measured before and after heat treatment at 360 °C using an X-ray diffractometer (Philips PW1830/3710/3020) with Cu KR radiation, $\lambda$=1.526 A°.

### *Thermal measurements*

Thermal gravimetric analysis (TGA) of air equilibrated freeze dried QPVPcS and QPVPcS composites (0.43-0.83 mmol/g clay, 0.17% MMT) were carried out on a Q500 Thermogravimetric Analyzer (TA instruments Inc.). The high resolution-dynamic program (sensitivity-3, resolution-2) includes a heating rate of 25 °C/min, temperature ranged from 30 to 800°C, nitrogen flow rate was 60.0 mL/min. Composites were analyzed before and after rinsing with tap water.

### *Elemental analysis* (*C,H,N, and Iodide*)

Determination of C, H and N was performed using the Perkin-Elmer 2400 series II Analyzer. A combustion method (950-10000°C) to convert the sample elements to simple gases was applied. The system uses a steady-state, wave front chromatographic approach, to separate the controlled gases which are detected as a function of thermal conductivity. Determination of iodide was done using the oxygen-flask combustion method (Schoniger application) for the decomposition of organic samples, and subsequent potentiometric titration by the 835 Titrando Metrohm Titroprocessor and by ion chromatography analysis using a Dionex IC system.

Figure 1 presents a schematic illustration of the quarternized poly-vinylpyridine co-styrene (QPVPcS) loading process on the Montmorillonite (MMT) composite, and further illustrates the adsorption of the diclofenac (DFC) as described hereinbelow.

## *Results*

### *Characterization of QPVPcS -Clay Composites*

***Zeta Potential:*** The results are presented in Figure 2. Despite the lower adsorption of QPVPcS to the clay, zeta potentials of the QPVPcS composites are higher than those of the HPVPcS composites, +40 to +80 vs. +30 to +40 mV, respectively, which is advantageous for binding anionic pollutants. These values are in agreement with the zeta potential of the polymers: +53±1.5 mV for QPVPcS, while for HPVPcS Zeta potential was +20±2 mV at pH 3.15. Furthermore, the positive charge on the HPVPcS composites is pH dependent i.e., as the pH increases (above 6.5) the polymer deprotonates and zeta potential become neutral (results not shown). Indeed, as discussed hereinbelow, DCF demonstrated higher binding affinity to QPVPcS than to HPVPcS composites.

***$^1$HNMR:*** The $^1$HNMR spectra of QPVPcS show characteristic of a signal absorption area corresponding to methyl, pyridine and styrene protons.

***Elemental analysis*** (***C,H,N, and Iodide***)*:* Without being bound by any particular theory or mechanism, it is assumed that enhanced adsorption at high polymer concentrations is usually explained in terms of polymer reorganization on the clay from a train configuration into a more extended configuration of loops and tails. To test whether QPVPcS loading on the clay effects its configuration, two QPVPcS composites were further characterized: a low loading composite (0.41mmol/g) representing the plateau region (denoted hereinthroughout "LOW") and a composite with a higher loading (0.83mmol/g) (denoted hereinthroughout "HIGH").

Upon polycation adsorption the percent of $I^-$ (the exchangeable anion of QPVPcS) was measured. For the LOW composite the iodide/carbon molar ratio was 3.6 while the ratio in the HIGH composite was significantly higher reaching 7.4. The molar ratio iodide/carbon for the QPVPcS in solution is 12 indicating that in the LOW and HIGH composites -30 and 62% of the anion sites are occupied by iodide, respectivly. The low percent of iodide in the LOW composite indicates that the polycation adsorbed by ion exchange (desorbing the iodide) and adsorbed in a train configuration. The relatively high percent of iodine in the HIGH composite indicates that the polycation adsorbed as trains and as well as with chains extending into the solution as loops and tails, retaining the exchangeable anion.

***FTIR measurements****:* The suggestion that the polymer adsorbs as trains and as loops and tails in addition to trains in the LOW and HIGH composites, respectively, was supported by FTIR measurements of the composites (Figure 3). Quarternization of PVPcS by methylation of the pyridine was confirmed by the absence of the characteristic pyridine vibrations at 1414 and 1596 $cm^{-1}$ [Li, G.; et al. J. Appl. Polym. Sci. 1996, 62, 2247]. in the QPVPcS sample and appearance of the three characteristic peaks of pyridinium at 1519, 1575, 1643 $cm^{-1}$ [Singh, P. K. et al., Synth. Met. 2010, 160, 950]. The absorption at 1643 $cm^{-1}$ describes the pyridine carbons stretching [Fournaris, K. G. et al., Chem. Mater. 1999, 11, 2372] which change as a function of the amine substituents identity.

The intensities of the QPVPcS indicative vibrations 1519 and 1575 $cm^{-1}$ obtained from the composite samples were in agreement with polymer loading on the clay. Upon QPVPcS adsorption a red shift of the indicative 1643 $cm^{-1}$ vibration to 1663 $cm^{-1}$ was measured which may be attributed to the formation of electrostatic interactions between the pyridinium and the negatively charged clay surface. A major shift to 1663 $cm^{-1}$ was observed for the LOW composite while both vibrations, 1643 and at 1664 $cm^{-1}$, were recorded for the HIGH composite indicating that at high polymer loading a fraction of the adsorbed QPVPcS does not interact directly with the clay through its pyridinium groups. This

supports the assumption that in the LOW composite the polymer mainly adsorbs as trains whereas at high polymer loadings (composite HIGH) a polymer configuration of loops and tails occurs as well.

Furthermore, as noted hereinabove, the HIGH composite reached a very positive zeta potential of 80 mV which is in agreement with the high QPVPcS loading exceeding the CEC of MMT. Although QPVPcS adsorption is below the CEC in the case of the LOW composite, zeta potential reached a positive value of 45 mV. For polycation-clay composites, positive values of zeta potential may be reached at polycation loadings below the CEC due to screening of the clay surface by the highly charged polycation. In addition, at polymer loadings below the CEC, polymer intercalation is probably not complete i.e., internal exchangeable sites may be unoccupied, but all external sites are associated with the adsorbed polymer resulting in a positive zeta potential.

***XRD measurements:*** To test whether the polycation intercalates the clay platelets X-ray diffractograms of the two composites before and after heat treatment (360 °C) were obtained (Figure 4). An expected basal spacing of 1.28 nm was measured for MMT. The basal spacing increased to 1.55 nm for the LOW composite and did not change for the HIGH composite. However, upon heating the d-spacing of MMT and composites reached 0.97 and 1.33 nm, respectively, indicating intercalation also in the HIGH composites. For the HIGH composite the peak is broad and non-symmetric with a shoulder (1.5 nm) and partial exfoliation (at low angels) is observed. Such a pattern is recorded for composites with heterogeneous intercalation/exfoliation.

Without being bound by any particular theory, it is assumed that the absence of a change in the d-spacing with an increase in polymer and upon polymer intercalation loading is attributed to water exclusion upon high polymer intercalation, suggesting that in the case of the LOW composite both water and polymer are intercalated. Another explanation to the decrease may be a change of the polymer orientation between the platelets.

***Thermal measurements:*** The suggestion that polymer intercalation in the HIGH composite includes water exclusion is supported by derivative thermogravimetric (DTG) measurements of MMT and of the composites (Figure 5). For MMT weight loss was obtained at 60 °C and 674 °C which is attributed to hygroscopic water and dehydration of structural water, respectively. For the LOW composite sample an additional weight loss at about105°C, attributed to water, is recorded supporting the conclusion that water is intercalated in the LOW composite.

QPVPcS polymer exhibited two discreet weight loss temperatures at 268 °C and 310 °C. For both composites, weight loss of the polymer was recorded at about 260 °C (similar to the non-adsorbed polymer) and at higher temperatures of 380 °C and 600 °C. The extremely high shift to an onset of 600 °C could be attributed to highly stable intercalated QPVPcS. The main difference obtained from the DTG between the two composites is that for the washed HIGH composite a decrease in the peak at 260-280 °C was observed. Conceivably, a fraction of the high loading of the less thermo-stable adsorbed polymer was loosely associated with the clay resulting in its desorption.

Finally, based on the zeta potential, TGA, XRD, FTIR and iodide/carbon measurements of the LOW and HIGH composites, an optional nano-structure of these composites was suggested (Figure 6). In the LOW composite, QPVPcS adsorbed to the external surface with high association with the clay, via electrostatic interactions, in a state that can be represented by trains. In this case polymer intercalation into the clay platelets was accompanied by water molecules. In contrast, for the HIGH composite polymer intercalation was not accompanied by water. At high QPVPcoS loading it adsorbed at the clay surface as trains but also in a configuration of loops and tails and a fraction of the adsorbed polymer was loosely associated with the clay resulting in its desorption upon composite rinsing.

### *EXAMPLE 3 (NOT ACCORDING TO THE PRESENT INVENTION) DICLOFENAC ADSORPTION TO POLYMER-CLAY COMPOSITES*

Diclofenac (DCF) was chosen as a model organic pollutant to demonstrate the removal of anionic pharmaceuticals by QPVPcoS-MMT composites. DCF, a non-steroidal anti-inflammatory drug, is one of the most frequently detected drugs in water bodies since its removal by most conventional wastewater treatments is low. However, its removal from water by a QPVP-MMT composite was efficient. The removal of DCF (2 mg/L) by the QPVP-clay composite (0.1 g/L) was significantly faster than by granulated activated carbon (GAC) (0.1 g/L) (Figure 7). The kinetics of removal is crucial when employing sorbent in filtration columns (high velocities).

### *Diclofenac analysis*

DCF (0.05-200 mg/L) was analyzed by HPLC (Agilent Technologies 1200 series) equipped with a diode-array detector. HPLC column was LiChroCARTR 250-4 PurospherR STAR RP-18 (5 μm), and the flow rate was 1.0 mL/min. Measurements were carried out isocratically. A mobile phase of acetonitrile/acidic water (0.1% formic acid) 80/20 was used. The concentrations of DCF were measured at a wavelength of 276 nm; limit of quantification (LOQ) was 0.05 mg/L.

DCF (0.025-12 μg/L) was measured by LC-MS/MS. The solutions were analyzed by an Agilent 1200 Rapid Resolution LC system (Santa Clara, CA) equipped with an Acclaim C18 RSLC column (Dionex, 2.1×150 mm, particle size 2.2 μm), coupled to a triple quadruple mass spectrometer with an electrospray ionization ion source. LC solvents

were acidic water (0.1% AcOH) (A) and acetonitrile (0.05% AcOH)(B). Gradient started from 40% of A reaching 5% within 8 min at a flow rate of 0.35 mL/min, injection volume was 100 μl. MS was operated in the positive ionization mode. Drying gas (nitrogen) temperature and flow were 350°C and 10L/min respectively. Quantitative analysis of DCF was performed in multiple reaction monitoring (MRM) mode, fragmentor potential was 50 V and MRM transitions were 296→278 and 296→215. LOD was 0.01 μg/L and LOQ was 0.025 μg/L. Isotopically labeled analogue of DCF was used as an internal standard.

***Diclofenac adsorption to QPVPcS composites***

DCF (30 mg/L) was added to centrifuge tubes containing QPVPcS composites (0-0.83 mmol polymer/g clay). The tubes were agitated for 24h. Supernatants were separated by centrifugation (12000 g for 10 min) and prior to HPLC analysis filtered with PTFE syringe filter (AXIVA) 0.45 μm pore size. Tests indicated that there was no sorption of DCF by the filters. The experiments were performed in triplicate and samples were kept in darkness in order to avoid photo degradation.

***Effect of ionic strength on DCF adsorption to polymer-clay composites***

QPVPcS, PVPcS and PD composites (0.15 g/g, 0.17% MMT) were prepared, centrifuged (12000 g, 10 min) and supernatants were discarded. The pH of the suspension was adjusted to 6.5-7 by rinsing with tap water (deprotonation of HPVPcS composite to form PVPcS composite). DCF (1 mg/L) was added in the presence of NaCl (0-100 mM). DCF concentrations in supernatants were measured after 24 hours by HPLC and DCF adsorption was calculated.

***Diclofenac humic acid interactions***

HA solution was filtered under vacuum through a prewashed membrane filter (0.45 μm). Total organic carbon (TOC) was measured by TOC analyzer and based on that HA concentration in solution was calculated. DCF (100 mg/L) in the presence of HA (1-20 mg/L) and $CaCl_2$ (10 mM) were added to QPVPcS composites (0.63 mmol/g, 1.9 g/L). Suspensions were agitated for 24 hours and centrifuged (25000 g for 15 min), DCF concentration in supernatants was measured by HPLC and DCF adsorption was calculated.

***Adsorption isotherms of diclofenac (DCF)***

QPVPcS composites (0.63 mmol/g) were prepared as mentioned. DCF (1-200 mg/l) was added to centrifuge tubes with suspensions of the composite or GAC (1.9 g/L) and agitated for 24h (equilibrium was reached). DCF concentrations in supernatants were measured by HPLC and DCF adsorption isotherms were constructed. The results were fitted to the Langmuir model using numerical solutions [Nir, S. et al. Environ. Sci. Technol. 2000, 34, 1269] and the binding coefficients were extracted.

***Kinetics of diclofenac adsorption***

Freeze-dried QPVPcS composites (0.63 mmol/g) and GAC were added to an agitated DCF solution (2 mg/L, 180 ml); final sorbents concentrations were 0.55 g/l. The concentration of DCF in the suspension was monitored with time (0-3 hour). For each measurement 0.5 ml were removed from the suspension and analyzed after being filtered by PTFE Acrodisc Syringe Filters (0.45 μm).

The kinetics of adsorption was analyzed as follows [Undabeytia, T. et al., Water Res. 2008, 42, 1211]:

$$\frac{dCe}{dt} = -C \times Ce(t) \times R(t) + D(R_0 - R(t))$$

In this equation, $R_0$ is the molar concentration of sorbent surface sites. Kinetic parameters C ($M^{-1}s^{-1}$), forward coefficient of adsorption, and D ($s^{-1}$), rate coefficient of desorption, satisfy the relation K=C/D ($R_0$ and K were determined by the adsorption isotherm). $R(t)$ denotes the molar concentration of unoccupied sites of the sorbent at time (t). Ce(t) relates to the contaminant molar concentration at time (t). This set of equations was solved by a Taylor series, as described previously [Nir, S., et al. Eng. Asp. 1994, 89, 45].

***Results***

***Diclofenac Adsorption to QPVPcS Composites:***

The efficiency of DCF adsorption to QPVPcS composites as a function of polymer loading was tested (Figure 8). DCF adsorption to the LOW composite reached 15 mg/g which increased with polymer loading, reaching a plateau with nearly complete DCF adsorption at a polymer loading of 0.63 mmol/g, similar to the HIGH composite. The interactions between DCF and the HIGH QPVPcS composite were further explored.

***Effect of ionic strength on DCF adsorption to polymer-clay composites:***

The interaction forces between DCF and the adsorbed QPVPcS may be derived from electrostatic, van der Waals, $\pi$-$\pi$ and hydrophobic interactions. To test the significance of electrostatic interactions the effect of ionic strength on DCF adsorption to the QPVPcS composite was tested. Results were compared to a composite that mainly forms electrostatic interactions, PD-MMT, and to a composite for which electrostatic interactions are minor, PVPcS-MMT (Figure 9). Indeed the adsorption of DCF to the PD composite decreased as the ionic strength increased due to screening of the electrostatic interaction between the polycation and anionic DCF. On the other hand, DCF interaction with the PVPcoS composite were high and hardly affected by the increase in the ionic strength, indicating, without being bound by any particular theory, that non-coloumbic bonds, such as H-bonds, $\pi$-$\pi$ and hydrophobic interactions, dominate DCF adsorption to this composite. The increase in ionic strength slightly decreased DCF adsorption to the QPVPcS composite but even at high ionic strengths the adsorption remained high suggesting that not only electrostatic interaction dominate the adsorption but also non-coloumbic bonds. In higher DCF/composites ratio (DCF 2 mg/L, composites 0.55g/L, 0.15g/g) (not shown), DCF adsorption to a QPVPcS composite was three fold higher than to a PVPcS composite. Hence, we can deduce that the contribution of hydrogen bonds to DCF adsorption is not as dominant as electrostatic interaction.

***Adsorption isotherms of diclofenac (DCF):***

To determine the capacity of the QPVPcS composite and of GAC to adsorb DCF, adsorption isotherms were constructed and Langmuir coefficients were calculated (Figure 10 and Table 1 below which presents the coefficients for equilibrium, Qmax and K, and the coefficients for kinetic- C-adsorption, D-adsorption isotherm for QPVPcS composite vis-à-vis the corresponding GAC parameters).

**Table 1**

| | Qmax (mol/g) | K (L/mol) | C (L/min*mol) | D (1/min) | $R^2$ |
|---|---|---|---|---|---|
| GAC | $2.8*10^{-4}$ | 38350 | 11 | $2.8*10^{-4}$ | 0.945 |
| QPVPcS composite | $3.41*10^{-4}$ | 26500 | 250 | $9.43*10^{-3}$ | 0.93 |

The adsorption capacities (Qmax coefficient) and the binding coefficients (K) to the composite and to GAC were in the same order of magnitude. The adsorption capacity to the QPVPcS composite was somewhat higher than to GAC, while the binding coefficient was slightly higher to GAC than to the composite.

***Kinetics of diclofenac adsorption***

Although DCF adsorption at equilibrium was similar to both sorbents the adsorption kinetics was dramatically faster to the composite (Figure 11). While DCF removal by GAC was linear and reached only 53% after three hours, the removal by QPVPcS composite was faster and reached complete adsorption after 45 minutes.

The binding affinity coefficient (K) can be described by the adsorption and desorption coefficient s, $K = \frac{C}{D}$ (C-adsorption coefficient and D-desorption coefficient) which can be calculated from the kinetic time dependent Langmuir equation. By relating this equation to the kinetic results, C and D can be quantitatively determined (as presented in Table 1 hereinabove).

The adsorption of DCF to QPVPcS composite (expressed by C) is substantially higher than to GAC. On the other hand, the release of DCF from GAC (expressed by D) is significantly lower. Since Qmax values of the sorbents are similar and the adsorption of DCF to the composite is faster than to GAC (expressed by C) efficient removal of DCF by filtration with composite columns is expected.

***EXAMPLE 4 (NOT ACCORDING TO THE PRESENT INVENTION) FILTRATION EXPERIMENTS***

***Diclofenac (DFC) and HA Filtration by the Composite and GAC Columns Filtration of diclofenac micro-concentrations:***

In exemplary procedures, DCF (1 mg/L in tap water, pH-7.4) filtration (2 mL/min, 600 mL, 20 pore volumes (PV)) by columns of QPVPcS and PVPcS composites (0.15±0.01 g/g) and GAC was studied (4 replicates). Columns were filled with 70 g sand mixed with 0.7g QPVPCS or PVPcS composites (1:100 w/w) or with a layer of 0.7g of GAC.

The filtration (4L, 200 PV, 2.3 mL/min) of DCF (1 mg/L in tap water, pH-7.4) in the presence of HA (5 mg/L) by QPVP and GAC columns was measured (2 replicates). The columns were prepared with a higher ratio of active sorbent 3.75 g composite or GAC/sand (~1:19 w/w). In both cases the eluting solutions were collected with time and DCF concentrations were determined by HPLC.

***Filtration of Diclofenac nano-concentrations:***

DCF (10 μg/L) and HA (5 mg/L) filtration (2L, 100 PV) by GAC and QPVPcS composite columns was measured (two replicates). The columns were prepared as described above with active sorbent (composite or GAC) sand ratio of about 1:19 w/w and a flow rate of 1.05 ml/min. DCF concentrations were analyzed by liquid chromatography-mass spectrometry (LC-MS/MS).

***Reducing Priming operation of the Filter:***

In order to reduce priming operations of the filter (washing the filter to remove impurities) prior to use, QPVPcoS-MMT was further designed to decrease leaching of excess polymer. MMT clay suspension of (5 g/L) was added to QPVPcoS 2 g/L solutions. The polymer solution was prepared with a background electrolyte solution (0-1 mol/L NaCl). The clay-polycation suspensions were agitated for at least 4h (equilibrium was reached within 1h) using a shaker, suspensions were centrifuged (12000 g for 10 min, 18°C) and supernatant separated. The precipitates were freeze-dried prior to use.

***Filtration Columns:***

QPVPcoS-MMT, three different GACs were packed in filtration columns (1/20 active ingredient) and the filtration of dissolved organic matter (DOM) found in secondary effluent from treated wastewater plans by these columns was tested and compared to the removal by a sand column.

***Results***

The removal of DCF (1 mg/L, pH 7.4) by filtration with GAC, QPVPcS and PVPcS composite columns (sand/composite weight ratio 1/100, flow rate 2 mL/min) was tested and the results are presented in Figure 12. DCF removal by the PVPcS composite column was not efficient due to deprotonation of the composite at the pH of tap water. The GAC column showed relatively low affinity to DCF (55%), but removal stayed constant throughout the experiment. On the other hand, DCF removal by the QPVPcS composite column was complete for up to 10 pore volumes followed by a linear decrease. These trends correlate to the values calculated for the adsorption (C) and desorption (D) coefficients i.e., high and low for the composite and GAC, respectively.

The decrease in micro-organic pollutants removal by GAC filters in the presence of DOM is known in the art and attributed to pore clogging of GAC by DOM (Ernst, 2000; Zadaka et al., 2009). In the current study the presence of HA (1-20 mg/L) in suspension did not affect the removal of DCF (100 mg/L) by the QPVPcS composite (1.9 g/L) which reached 33±2 mg/g in all cases (results not shown). Accordingly, DCF filtration (1 mg/L, pH 7.4) by composite columns was only slightly reduced in the presence of HA (5 mg/L), while its filtration by GAC was significantly compromised (reduced to 73% from 92%) (Figure 13). The reduction in micro-pollutant removal by GAC in the presence of DOM has been explained in terms of pore cogging which is not a limitation in the case of the composite. Since DCF and HA are both anionic (at natural pH) strong interactions between the two are not expected. On the other hand, they might compete on the composites adsorption sites.

Based on the above results, one may conclude that HA does not hinder DCF adsorption and perhaps they adsorb to different sites on QPVPcS composites.

DCF filtration at nano-concentration (10 μg/L) in the presence of HA (5 mg/L) by GAC and QPVPcS composites was measured (as presented in Table 2 hereinbelow which shows the DCF (10 μg/L) removal in the presence of HA (5 mg/L) by columns of QPVPcS composites (0.63 mmol/g) and GAC mixed with sand (1/19), and flow rate of 1.05±0.1

mL/min.

**Table 2**

| | C/Co | |
|---|---|---|
| Volume (ml) | QPVPcS composite | GAC |
| 330 | 0.005 | 0.006 |
| 460 | 0.004 | 0.008 |
| 595 | 0.005 | 0.011 |
| 726 | 0.005 | 0.013 |
| 860 | 0.005 | 0.016 |
| 1320 | 0.012 | 0.035 |
| 1850 | 0.026 | 0.043 |

Throughout the experiment, the removal of DCF by the composite columns was higher than by the GAC columns. At the end of the experiment DCF concentration eluting from the GAC column was 2-fold higher than the concentration eluting from the composite columns emphasizing the advantage of the composite as a sorbent. A better understanding of the DOM-composite interactions may explain the high adsorption of DCF by the composite even in the presence of high DOM concentrations.

***Reducing Priming operation of the Filter:*** An increase in ionic strength led to higher polymer loading (Figure 14A), with a maximum at 1 mol/L NaCl. Furthermore, QPVPcoS-MMT prepared at higher ionic strengths packed in filtration columns (1/100) exhibited less polymer leaching when columns were pre-washed (Figure 14B). As a result, column priming operations was shorter and the polymer loss was minimized.

***Filtration Columns:*** The removal of the dissolved organic matter (12 mg/L) by the QPVPcoS-MMT composite was higher than by the three different GACs and the sand column (Figure 15). The ionic strength concentration in composite preparation had no effect on DOM filtration by the different composites (Figure 16) and there advantage in comparison to filtration by GAC remained also at a 1/100 ration of active ingredient.

***EXAMPLE 5***

**SYNTHESIS OF HYDROXYLATED PVP**

A hydroxylated PVP was synthesized. PVP (5g) was freeze-dried, solubilized in absolute anhydrous ethanol (120 ml) for 24 hours and 5 ml of bromoethanol was added to the solution in excess to ensure complete ethylation of pyridine. The reaction mixture was refluxed for 12h at 80°C. The solvent was removed under reduced pressure and the final product was freeze-dried before use.

The removal of the anionic pharmaceutical gemfibrozil by OHPVP composites was more efficient than by QPVPcoS composites at the same polymer loadings (Figure 17).

**EXAMPLE 6 *(NOT ACCORDING TO THE PRESENT INVENTION) EFFECT OF POLYCATION CONFIGURATION ON PHARMACEUTICAL REMOVAL***

**Methods**

Samples of secondary treated effluent containing effluent organic matter (EfOM), and HA were filtered through a 0.45 μm Acrodisc syringe filter prior to measurement. EfOM mainly consists of biological treatment derived soluble microbial products, refractory humic substances derived from drinking water, inorganic ions and trace levels of organic micropollutants including pharmaceuticals.

***Zeta Potential Measurements.*** Zeta potentials of Shafdan effluent (12.2 mg/L dissolved organic carbon (DOC)) and HA (3 mg/L (DOC)) solutions were measured as described above.

***UV-Vis Spectrophotometry.*** UV absorbance at a wavelength of 254 nm ($UV_{254}$) was measured (Thermo Scientific, Evolution 300, Waltham, MA, USA).

***Dissolved Organic Carbon (DOC) Measurements:*** DOC (mg/L) was measured at the Nesin laboratory of Mekorot, National Water Carrier, following the Standard Methods.

***Comparison of UV-Vis and DOC Measurements:*** Shafdan secondary effluent was passed through QPVP-MMT, Shafdan soil and GAC columns (see details below). The DOC content and $UV_{254}$ of the eluent were determined (as described above) at timed intervals, and their values plotted against each other for the GAC and composite columns separately. Since no significant difference between sorbents was observed, a statistically significant ($P<0.0001$) regression was obtained for the whole data set, as reported elsewhere (Goren et al., 2008). This indicated that UV-Vis spectrophotometry may be used to compare the removal efficiency of the different sorbents.

QPVP-MMT composites prepared from polycation solution with ionic strength (IS) of 0 M, 0.01 M and 1 M, are denoted QPVP 0 M-, QPVP 0.01 M- and QPVP 1 M-MMT, respectively.

**Removal of EfOM and Humic Acid by QPVP-MMT Composite and GAC**

***EfOM and HA adsorption to QPVP-MMT composites:*** EfOM (12.2 mg/L DOC) or HA (3 mg/L DOC) were added to centrifuge tubes containing QPVP-MMT composites (0-1.1 mmol QPVP/g clay). In both cases, the ratio of added dissolved organics to clay was 18 mg DOC/g clay. Control samples (i.e. HA or EfOM without sorbent) were included. The tubes were agitated for 24 h, supernatants were separated by centrifugation (10000 g; 15 min) and their $UV_{254}$ was measured. Amount of EfOM or HA adsorbed (% removal) was calculated accordingly.

***Filtration of EfOM and HA by QPVP-MMT and GAC Columns:*** Glass columns (20 cm length, 1 cm diameter, 6 mL pore volume) were filled with 20 g of quartz sand and 0.2 g sorbent (Low QPVP-MMT and QPVP 0 M- 0.01 M- and 1M- MMT, or GAC) to achieve a weight ratio of 1:100 (w/w). The sorbents were mixed with excess quartz sand to enable a high flow rate through the column. These composite columns were washed by passing tap water, and polycation concentration in the leachate was monitored and quantified by UV-Vis, as described above. Cumulative polycation desorption from each composite was ~5% of initial polycation content. No polycation was detected in the water after 18 pore volumes for the QPVP-MMT 0 M and 0.01 M and after 130 pore volumes for the QPVP-MMT 1 M composite.

Filtration of HA (3 mg/L DOC) and Shafdan effluent derived EfOM (12.2 mg/L DOC) by the columns was studied (150-200 pore volumes). Experiments were carried out in duplicates at 25° C, at a flow rate of 2 mL/min, obtaining a filter velocity of 1.5 m/h.

A filtration experiment at higher composite/sand ratio (1:20 (w/w)) testing the most efficient composite was conducted. Glass columns (20 cm length, 1.5 cm diameter, 30 mL pore volume) were filled with either Shafdan soil (74 g), QPVP-MMT 0 M-MMT or GAC (3.5 g) mixed with 70.5 g of quartz sand. Shafdan secondary effluent was passed through each of the filters at a flow rate of 3.6 mL/min, obtaining a filter velocity of 1.3 m/h. The eluents and stock solutions were collected in timed intervals and analyzed for EfOM concentration by UV-vis spectrophotometry. $UV_{254}$ and DOC of Shafdan effluent and HA stock solution remained constant in the timeframe of the filtration experiments.

**Removal of Anionic Micropollutants by OPVP Composites**

***Micropollutant Analysis:*** Micropollutant concentration in the supernatants was measured by an Agilent 1200 series HPLC instrument equipped with a G1315D diode-array detector and a G1321A fluorescence detector. HPLC column was Phenomenox Luna C18(2) (5 $\mu$m). DCF was measured with the diode-array detector ($\lambda$ = 276 nm) and IBU and GFZ were measured by fluorescence ($\lambda_{ex}$ =210 $\lambda_{em}$ = 300 nm and $\lambda_{ex}$ =220 $\lambda_{em}$ = 300 nm, respectively). Measurements were carried out isocratically at 30° C. The mobile phase was acetonitrile and acidified double distilled water (0.1% formic acid) (80/20 for DCF and GFZ and 90/10 for IBU). The flow rate was 1 mL/min for DCF and GFZ and 1.2 mL/min for IBU. LOQ was 0.05, 0.015 and 0.05 mg/L for DCF, GFZ and IBU, respectively. Initial micropollutant concentration in the Shafdan effluent was below the LOD of the HPLC analysis.

***Adsorption of Micropollutant to QPVP Composites:*** Stock solutions of DCF, GFZ and IBU were prepared in methanol (30, 17, 15 mg/mL). Tap water or Shafdan effluent (pH 7.8) were spiked (0.1% v/v) with the above stock solutions yielding working solutions of DCF, GFZ, and IBU, (30 mg/L, 0.094 mM) (17 mg/L, 0.068 mM), (15 mg/L, 0.073 mM), respectively. These concentrations correspond to approximately 12 mg DOC/L, similar to the DOC concentration of EfOM in the Shafdan effluent. Micropollutant working solutions were added to 50 mL teflon tubes containing QPVP 0 M- and QPVP 1 M-MMT composites (1.67 g/L) and agitated for 24 h. Supernatants were separated by centrifugation (10000 g; 15 min) and filtered with 0.45 $\mu$m PTFE syringe filters (AXIVA). Analyte loss in control samples (i.e. micro pollutant without composite) was negligible.

***Anionic Micropollutant Interactions with*** EfOM***:*** Shafdan effluent (50 mL) was added to dialysis bags (1000 Da cutoff) and immersed in tap water (150 mL) (to minimize excess dilution of electrolyte) which was spiked with DCF, GFZ or IBU to obtain a final concentration of 20, 11.3 and 10 mg/L, respectively, and agitated for 48 h. Micropollutant concentrations inside and outside of the dialysis bags were determined. Different micropollutant concentrations inside and outside the bags would suggest micropollutant-EfOM interactions. However, the concentration of DCF, GFZ and IBU inside and outside of the dialysis bag did not differ significantly, indicating that interactions between negatively charged EfOM and micropollutants were negligible, as expected.

Control samples which included the micropollutants in the absence of effluent, verified that DCF, GFZ or IBU concentrations inside and outside the dialysis bag were equal. Adsorption of the tested micropollutants to the dialysis bag was found to be negligible (<%5). Micropollutant concentration did not decrease upon incubation with Shafdan effluent (48 h). Additional control tubes containing Shafdan effluent (in the absence of micropollutants) indicated that approximately 50% of the EfOM diffused outside the dialysis bags as previously reported. The low molecular weight fraction was not discarded in order to determine the interactions of the micropollutants with both EfOM size fractions.

***Results***

***Adsorption of EfOM by Composites:*** EfOM contains smaller, less charged components as well as highly charged humic substances, and the effect of composite zeta potential on EfOM may be less pronounced and the effect of non-specific interactions more dominant. To investigate the degree of the effect of composite zeta potential on EfOM adsorption, the adsorption of EfOM by QPVP-MMT composites bearing negative and positive zeta potentials, was investigated (Figure 18). Zeta potentials of QPVP 0 M-, QPVP 0.01 M- and QPVP 1 M-MMT are highly positive (40-45 mV) therefore composites with QPVP loadings lower than that of QPVP 0 M-MMT (1.1 mmol QPVP/g clay) were studied. Charge neutralization was reached at 0.23 mmol QPVP/g clay, roughly 30% of the cation exchange capacity, due to electrostatic screening of the clay surface (-40 mV) by QPVP (+54 mV). EfOM removal increased moderately with QPVP loading, from 45 to 49%, which also correlated with less negative values of zeta potential (Figure 18, left panel). EfOM adsorption by positively charged composites further increased to 65%. Upon EfOM adsorption, zeta potential of the composites decreased due to EfOM adsorption and due to electrostatic screening induced by the high electrolyte concentration of the effluent (EC=1.5 dS/m). Similar to the previous studies a dominant effect of composite zeta potential was obtained for the removal of HA (95%) (Figure 18, right panel). In the case of HA a threshold in zeta potential was observed with an abrupt increase in its removal upon composite charge reversal.

The observed differences between EfOM and HA adsorption can then be attributed to their respective properties. EfOM is negatively charged (-21 mV) but contains a large fraction of low molecular weight, low charged compounds, which are less prone to electrostatic interactions with positively charged QPVP-MMT composites. Indeed, EfOM treatment poses a challenge due to its high heterogeneity and high electrolyte background.

***Filtration of EfOM by Composite and GAC Columns:*** The filtration of EfOM by columns of composites with similar positive zeta potentials (45 mV) but different configurations, QPVP 0 M-, QPVP 0.01 M- and QPVP 1 M-MMT was studied and compared to the filtration by GAC columns (Figure 19A).

The filtration of EfOM throughout the entire experiment was more efficient (% removal) by QPVP composite columns, approximately 3-fold higher, than by the GAC columns. EfOM may adsorb to both sorbents via non-specific interactions. The low removal of EfOM by the GAC can be attributed to its negative surface charge (-22 mV) as well as pore clogging. On the other hand, the higher removal by the composites can be attributed to electrostatic interaction with the negatively charged components of EfOM, despite the fact that electrostatic interactions are not as dominant as in the case of HA filtration (Figure 19B).

Interestingly, the overall EfOM removal by filtration columns was not affected by QPVP configuration. Moreover, when plotting EfOM or HA removal efficiency normalized to QPVP loading (Figures 20A-B) (since the polycation is the adsorbing component in the composite) it is evident that the removal by the QPVP 1 M composite is the lowest. The cumulative removal (of HA) by the negatively charged composite (Low QPVP-MMT) was the lowest, thus, the negative charge and not the low polycation loading led to low removal (Figure 19B).

***Effect of Polycation Configuration on Micropollutant Removal:*** Although it appears that QPVP adsorbed configuration and/or loading did not play a role in overall removal of EfOM, it is reasonable that the higher loading and/or a loops and tails configuration will be beneficial for the removal of anionic micropollutants which are within the size range of QPVP loops and tails.

Without being bound by any particular theory, it is hypothesized that the removal by the QPVP 1 M-MMT composite would be superior to that of the 0 M-MMT composite due to a greater number of QPVP monomers available for adsorption. To test this hypothesis, the adsorption of three anionic pharmaceuticals was measured: diclofenac (DCF), gemfibrozil (GFZ) and ibuprofen (IBU), from tap water and from Shafdan effluent, to QPVP 0 M- and 1 M-MMT. The micropollutants were added at the same organic carbon concentration as the EfOM (12.2 mg/L DOC).

In all cases, micropollutant removal was higher by QPVP 1 M-MMT than by QPVP 0 M-MMT.

Figures 21A-C present removal of diclofenac (30 mg/L), gemfibrozil (17 mg/L) and ibuprofen (15 mg/L) by QPVP 0 M- and 1 M-MMT composites from tap water (TW) and Shafdan effluent (EfOM). Even when normalizing micropollutant removal to QPVP loading, the removal of GFZ and of IBU from EfOM was higher by QPVP 1M-MMT (71 and 32 mmol/g polymer, respectively, than by QPVP 0 M-MMT (34 and 22 mmol/g polymer, respectively).

Normalizing micropollutant removal by polymer loading emphasizes the contribution of polymer configuration. The removal of DCF was extremely high by both composites (an increase of ~20% was obtained for the removal by the QPVP 1 M-MMT) but the advantage of the loops and tails was not expressed when normalizing to polymer loading. As

expected, micropollutant removal from EfOM (EC=1.5 dS/m) was lower than from tap water (EC=0.6 dS/m). The degree of reduction varied between the micropollutatns indicating their different interactions with the composites (to be addressed in future studies).

The reduction in removal of each micropollutant (represented by values above arrows) was lower in the case of QPVP 1 M-MMT. These results support the hypothesis that loops a tails configuration offers beneficial binding sites for micropollutants which are overseen by the bulk EfOM.

Finally, the filtration at a larger scale of EfOM by QPVP 0 M-MMT (which was found more cost effective than QPVP 1 M-MMT) was compared to the filtration by two different GAC columns and soil from the Shafdan area (as shown in Figure 22). EfOM filtration by the composite columns was significantly higher (80 to 60% removal) than by the Shafdan soil (10 to 5% removal) and both GAC columns (70 to 30% removal) throughout the entire experiment.

It was demonstrated that efficient EfOM removal was obtained by employing a QPVP-MMT composite that has a low polycation loading, yet is positively charged. Higher polycation loading, adsorbed as loops and tails, offered unique binding sites for anionic micropollutants which were overseen by the bulk EfOM. Micropollutants may compete for binding sites with other EfOM components but independent binding on unique sites may also occur. This approach of tuning composite properties to bind, with high affinity, different classes of organic pollutants, may enable treating complex water matrixes by employing various composite designs in a filtration system.

**EXAMPLE 7**

***COMPARATIVE FILTRATION EXPERIMENTS***

The adsorption of gemfibrozil (GFZ; 1 ppm) from Shafdan effluent derived EfOM was measured on the following composites (0.14g/g) HPVP-coS, PDADMAC, QPVP-coS, OH(100)PVP, and OH(50)PVP, as denoted hereinbelow in Table 3, showing the best results to OH(100)PVP, and OH(50)PVP. Only OH(100)PVP is according to the present invention.

**Table 3**

| Composite | Structure | Bond type | % GFZ adsorption |
|---|---|---|---|
| HPVP-coS | 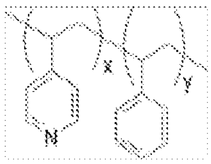 | π-π | 50 |
| PDADMAC | 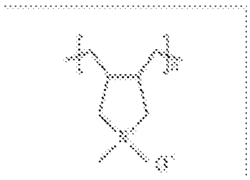 | electrostatic | 88 |
| QPVP-coS | 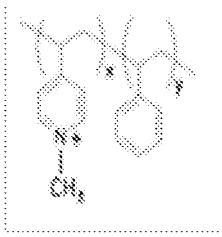 | π-π electrostatic | 76 |

(continued)

| Composite | Structure | Bond type | % GFZ adsorption |
|---|---|---|---|
| OH(100)PVP | 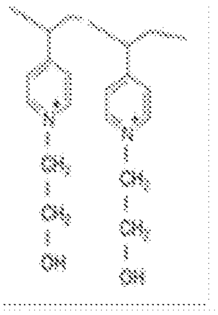 | π-π electrostatic Hydrogen | 91 |
| OH(50)PVP | 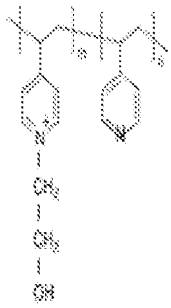 | π-π electrostatic Hydrogen | 90 |

Table 4 below presents the binding coefficients of the corresponding compositions according to Langmuir adsorption model: Qmax is Langmuir capacity, C-adsorption coefficient and D is desorption coefficient).

**Table 4**

| Pollutant | composite | Q max (mmol/g) | K (l/mmol) | $R^2$ |
|---|---|---|---|---|
| GFZ | OH(50)PVP | 0.062 | 96.490 | 0.98 |
| | OH(100)PVP | 0.045 | 22.920 | 0.95 |
| DCF | OH(100)PVP | 0.061 | 96.46 | 0.73 |
| | QPVP (100) | 0.034 | 26.5 | 0.93 |

Figures 23A-B show the adsorption isotherms of: gemfibrozil (GFZ; 1-17 ppm) on OHPVP-MMT composites (Figure 23 A), and GFZ and diclofenac (1-17 ppm) on OHPVP (100)-MMT composite (0.14g polymer/g; 0.83 g/l).

It can be concluded that OHPVP (50) has a better adsorption affinity to anionic compounds such as GFZ, than OHPVP (100).

Figure 24 presents the kinetics of GFZ (1ppm) adsorption by OHPVP(50) composite (0.14 g/g) and by GAC (1.67 g/l). Table 5 below presents GFZ removal coefficients by OHPVP(50) and GAC. It can be concluded that these composites exerts a superior adsorption capacity compared to activated carbon.

**Table 5**

| sorbent | $Q_{MAX}$ (mmol/g) | C (l/mmol*min) | D (1/min) | $R^2$ |
|---|---|---|---|---|
| Composite | 0.1 | 6 | 0.13 | 0.72 |
| GAC | 0.08 | 0.6 | 0.00002 | 0.98 |
| Composite+ Shafdan | 0.02 | 1.1 | 0.16 | 0.92 |
| GAC+ Shafdan | 0.04 | 0.19 | 0.00002 | 0.99 |

Although the invention has been described in conjunction with specific embodiments thereof, it is evident that many alternatives, modifications and variations will be apparent to those skilled in the art. Accordingly, it is intended to

embrace all such alternatives, modifications and variations that fall within the scope of the appended claims.

Citation or identification of any reference in this application shall not be construed as an admission that such reference is available as prior art to the present invention. To the extent that section headings are used, they should not be construed as necessarily limiting.

## Claims

1. A composite comprising a mineral clay and a compound comprising a polymeric backbone represented by formula 13:

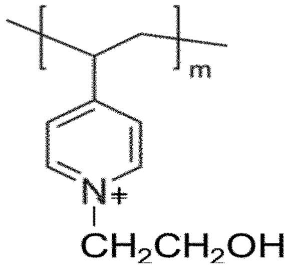

I3

wherein:
m has a value of at least 5.

2. The composite of claim 1 wherein the mineral clay is a phyllosilicate selected from the group consisting of illite, sepiolite, attapulgite, hectorite, smectite and kaolinite.

3. The composite of claim 2 , wherein the smectite is montmorillonite.

4. The composite of claim 3 , wherein the montmorillonite is in the form of bentonite.

5. A method of removal of one or more organic-based materials from an aqueous solution, the method comprising incorporating the composite of any one of claims 1 to 4 , within a filtering system or filter housing, and contacting said aqueous solution with said filtering system or said filter housing.

6. The method of claim 5, wherein said one or more organic-based materials are selected from the group consisting of: petroleum, organic acids, ketones, aldehydes, aromatic components including phenols, organic materials containing heteroatoms, dyes, polymeric materials, proteins, fatty acids, cyanide, hydrazine, organic insecticides, herbicides, and sewage contamination, and any combination thereof.

7. The method of any one of claims 5 and 6 , wherein said one or more organic-based materials comprise a pharmaceutical composition.

8. The method of claim 7, wherein the pharmaceutical composition comprises diclofenac (DCF).

## Patentansprüche

1. Verbundstoff, umfassend einen mineralischen Ton und eine Verbindung, die ein polymeres Grundgerüst der Formel I3 umfasst:

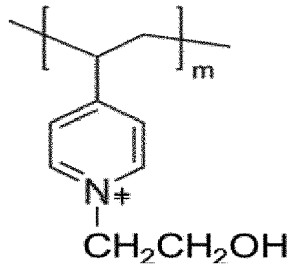

I3

wobei:
m einen Wert von mindestens 5 hat.

2. Verbundstoff nach Anspruch 1, bei dem der mineralische Ton ein Schichtsilikat ist, ausgewählt aus der Gruppe bestehend aus Illit, Sepiolith, Attapulgit, Hectorit, Smektit und Kaolinit.

3. Verbundstoff nach Anspruch 2, bei dem der Smektit Montmorillonit ist.

4. Verbundstoff nach Anspruch 3 , bei dem der Montmorillonit in Form von Bentonit vorliegt.

5. Verfahren zur Entfernung eines oder mehrerer Materialien auf organischer Grundlage aus einer wässrigen Lösung, wobei das Verfahren das Einbringen des Verbundstoffs nach einem der Ansprüche 1 bis 4 in ein Filtersystem oder Filtergehäuse und das Inkontaktbringen der wässrigen Lösung mit dem Filtersystem oder dem Filtergehäuse umfasst.

6. Verfahren nach Anspruch 5, bei dem die ein oder mehreren Materialien auf organischer Grundlage ausgewählt sind aus der Gruppe bestehend aus: Petroleum, organischen Säuren, Ketonen, Aldehyden, aromatischen Komponenten einschließlich Phenolen, Heteroatome enthaltenden organischen Materialien, Farbstoffen, Polymermaterialien, Proteinen, Fettsäuren, Cyanid, Hydrazin, organischen Insektiziden, Herbiziden und Abwasserkontaminationen und einer beliebigen Kombination davon.

7. Verfahren nach einem der Ansprüche 5 und 6, bei dem die ein oder mehreren Materialien auf organischer Grundlage eine pharmazeutische Zusammensetzung umfassen.

8. Verfahren nach Anspruch 7, bei dem die pharmazeutische Zusammensetzung Diclofenac (DCF) umfasst.

## Revendications

1. Composite comprenant une argile minérale et un composé comprenant un squelette polymère représenté par la formule I3 :

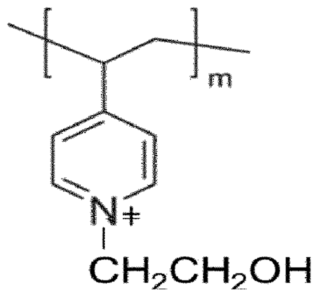

I3

dans laquelle :
m a une valeur d'au moins 5.

2. Composite de la revendication 1, dans lequel l'argile minérale est un phyllosilicate choisi dans le groupe consistant en l'illite, la sépiolite, l'attapulgite, l'hectorite, la smectite et la kaolinite.

3. Composite de la revendication 2, dans lequel la smectite est la montmorillonite.

4. Composite de la revendication 3, dans lequel la montmorillonite se présente sous forme de bentonite.

5. Procédé d'élimination d'un ou plusieurs matériaux à base organique d'une solution aqueuse, le procédé comprenant les étapes consistant à incorporer le composite de l'une quelconque des revendications 1 à 4 dans un système de filtration ou un boîtier de filtre, et à mettre en contact ladite solution aqueuse avec ledit système de filtration ou ledit boîtier de filtre.

6. Procédé de la revendication 5, dans lequel lesdits un ou plusieurs matériaux à base organique sont choisis dans le groupe consistant en : le pétrole, des acides organiques, des cétones, des aldéhydes, des composants aromatiques y compris des phénols, des matériaux organiques contenant des hétéroatomes, des colorants, des matériaux polymères, des protéines, des acides gras, le cyanure, l'hydrazine, des insecticides organiques, des herbicides, et la contamination par des eaux usées, et toute combinaison de ceux-ci.

7. Procédé de l'une quelconque des revendications 5 et 6, dans lequel lesdits un ou plusieurs matériaux à base organique comprennent une composition pharmaceutique.

8. Procédé de la revendication 7, dans lequel la composition pharmaceutique comprend du diclofénac (DCF).

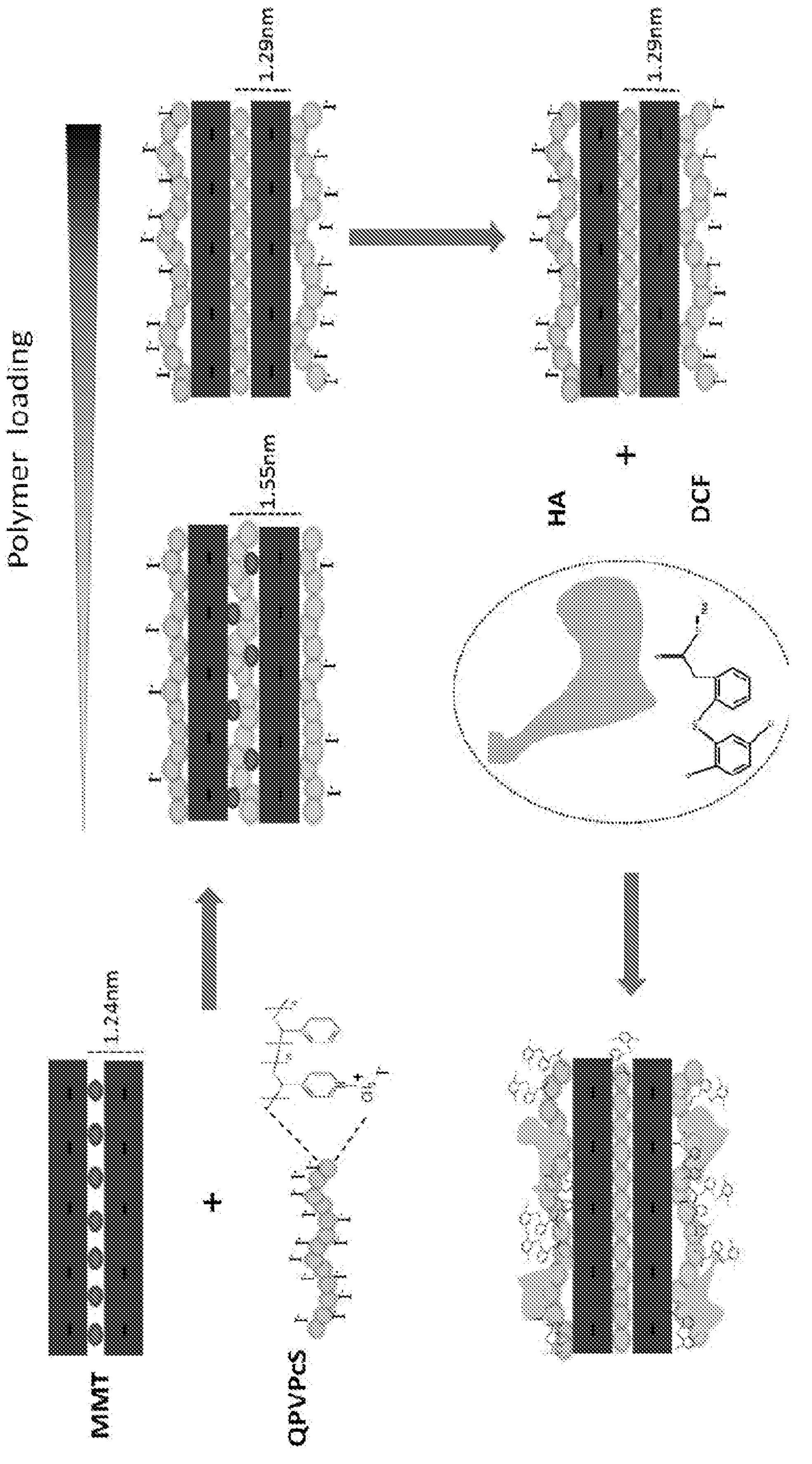


FIG. 1

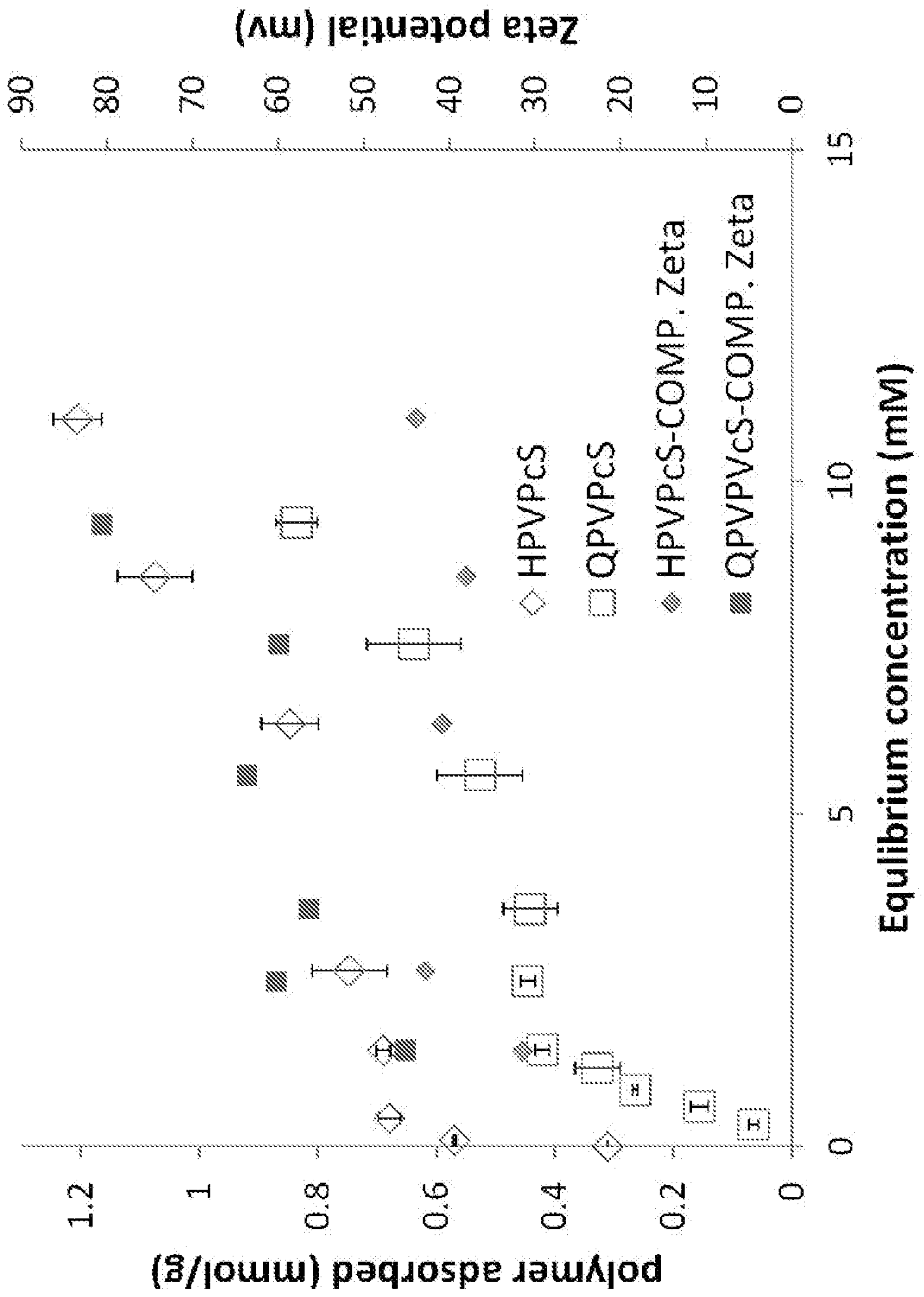
Zeta potential (mv)
90
80
70
60
50
40
30
20
10
0
polymer adsorbed (mmol/g)
1.2
1
0.8
0.6
0.4
0.2
0
Equlibrium concentration (mM)
0
5
10
15
HPVPcS
QPVPcS
HPVPcS-COMP. Zeta
QPVPVcS-COMP. Zeta

FIG. 2

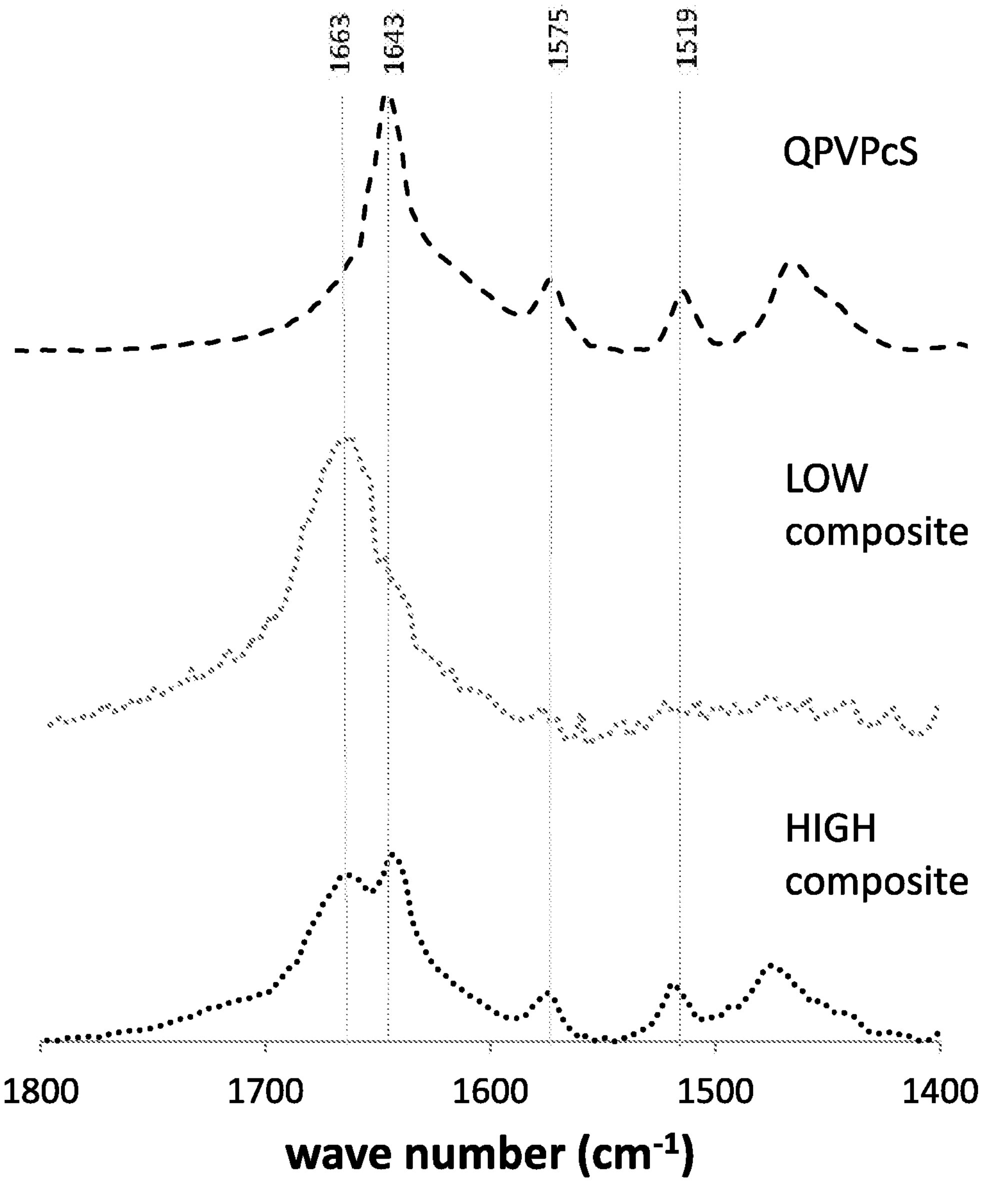
1663
1643
1575
1519
QPVPcS
LOW composite
HIGH composite
1800
1700
1600
1500
1400
wave number (cm-1)

FIG. 3

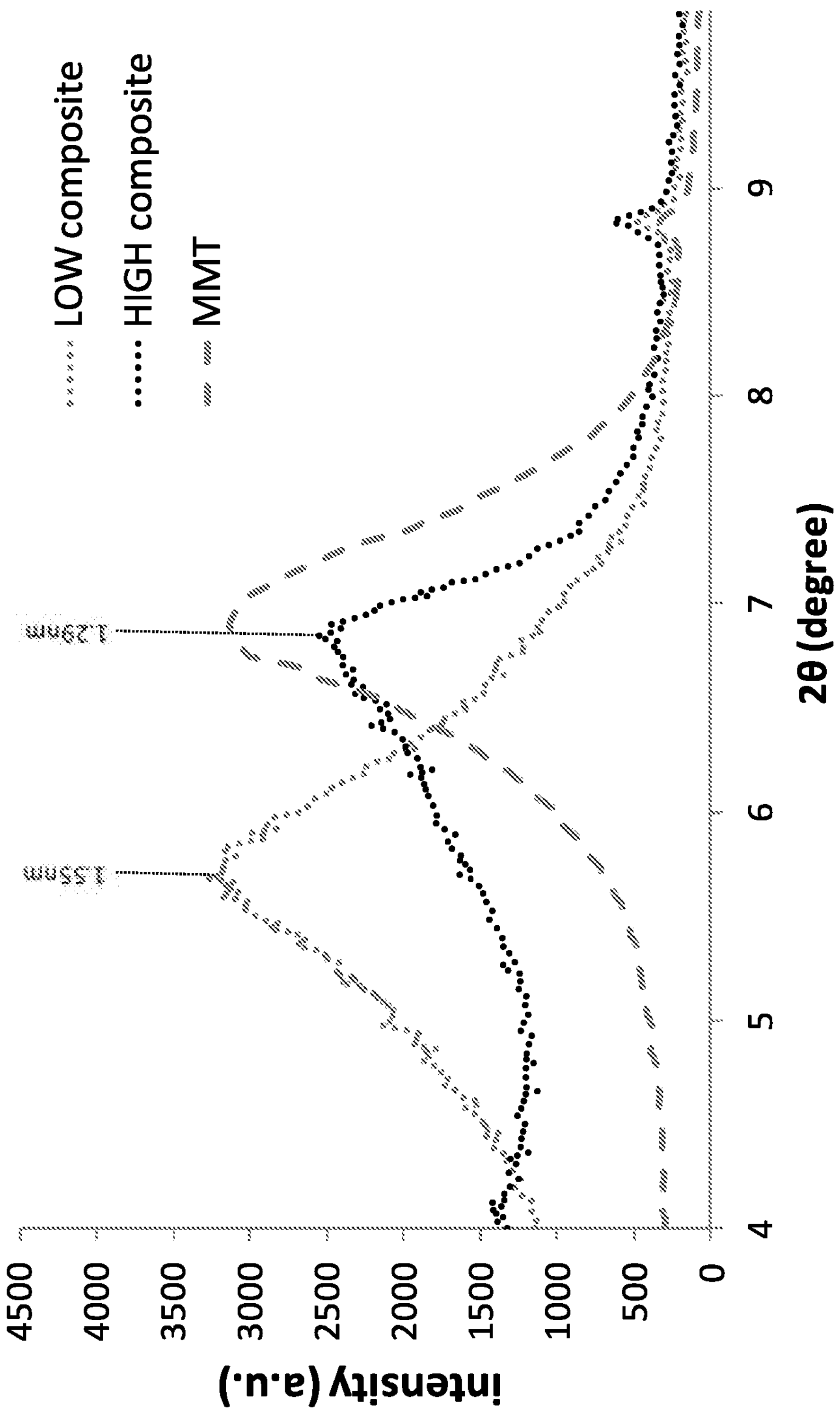

LOW composite
HIGH composite
MMT
1.55nm
1.29nm
intensity (a.u.)
4500
4000
3500
3000
2500
2000
1500
1000
500
0
4
5
6
7
8
9
2θ (degree)


FIG. 4

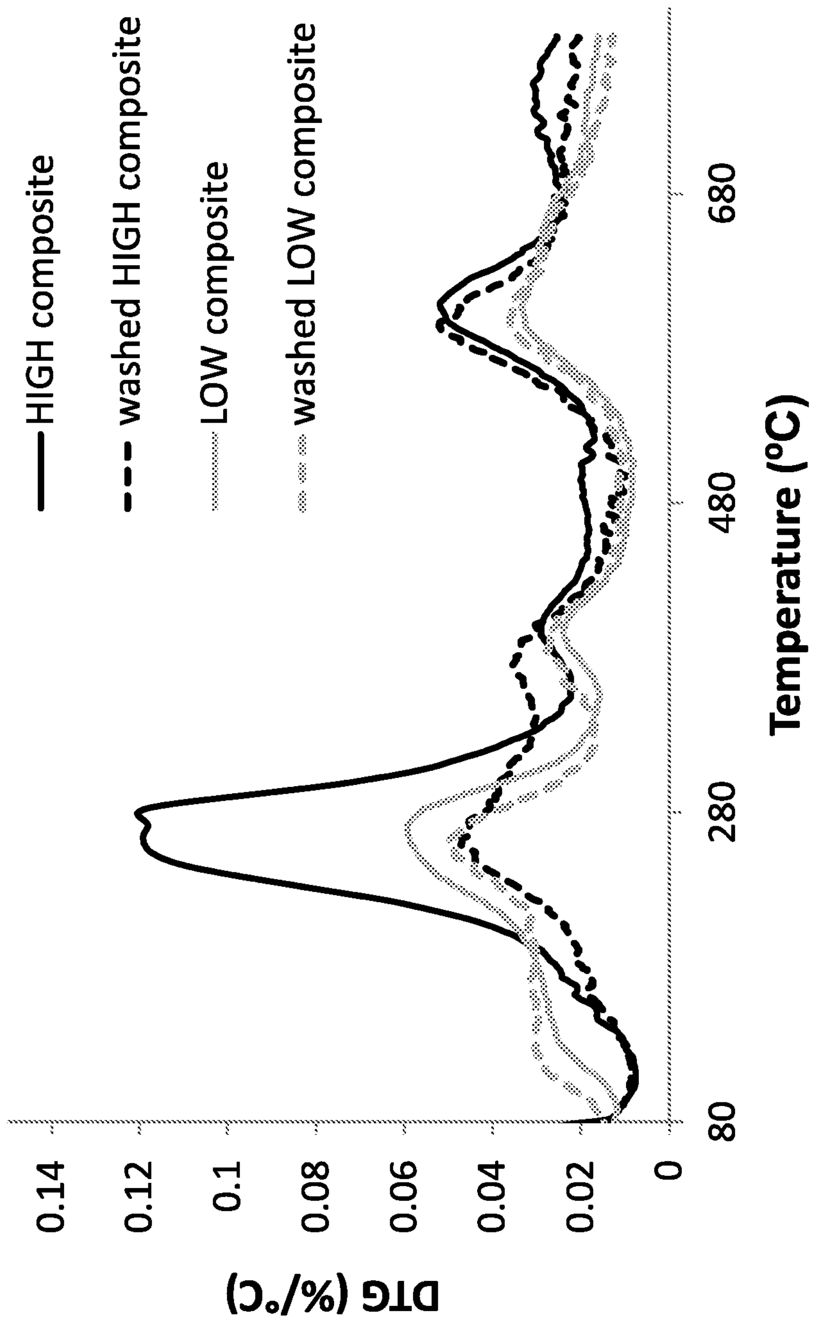
HIGH composite
washed HIGH composite
LOW composite
washed LOW composite
DTG (%/°C)
0.14
0.12
0.1
0.08
0.06
0.04
0.02
0
80
280
480
680
Temperature (°C)

FIG. 5

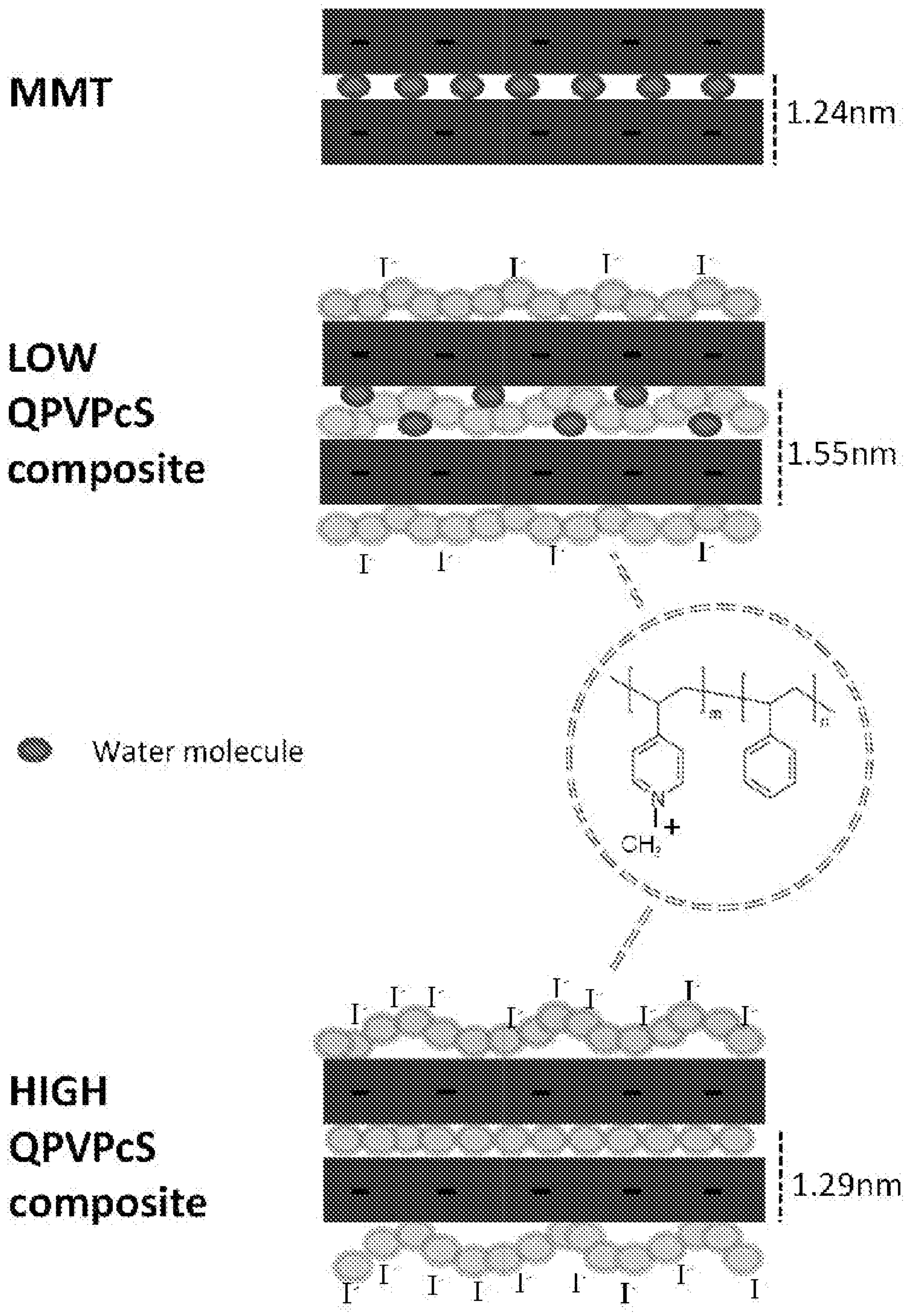
MMT
1.24nm
LOW QPVPcS composite
1.55nm
Water molecule
HIGH QPVPcS composite
1.29nm

FIG. 6

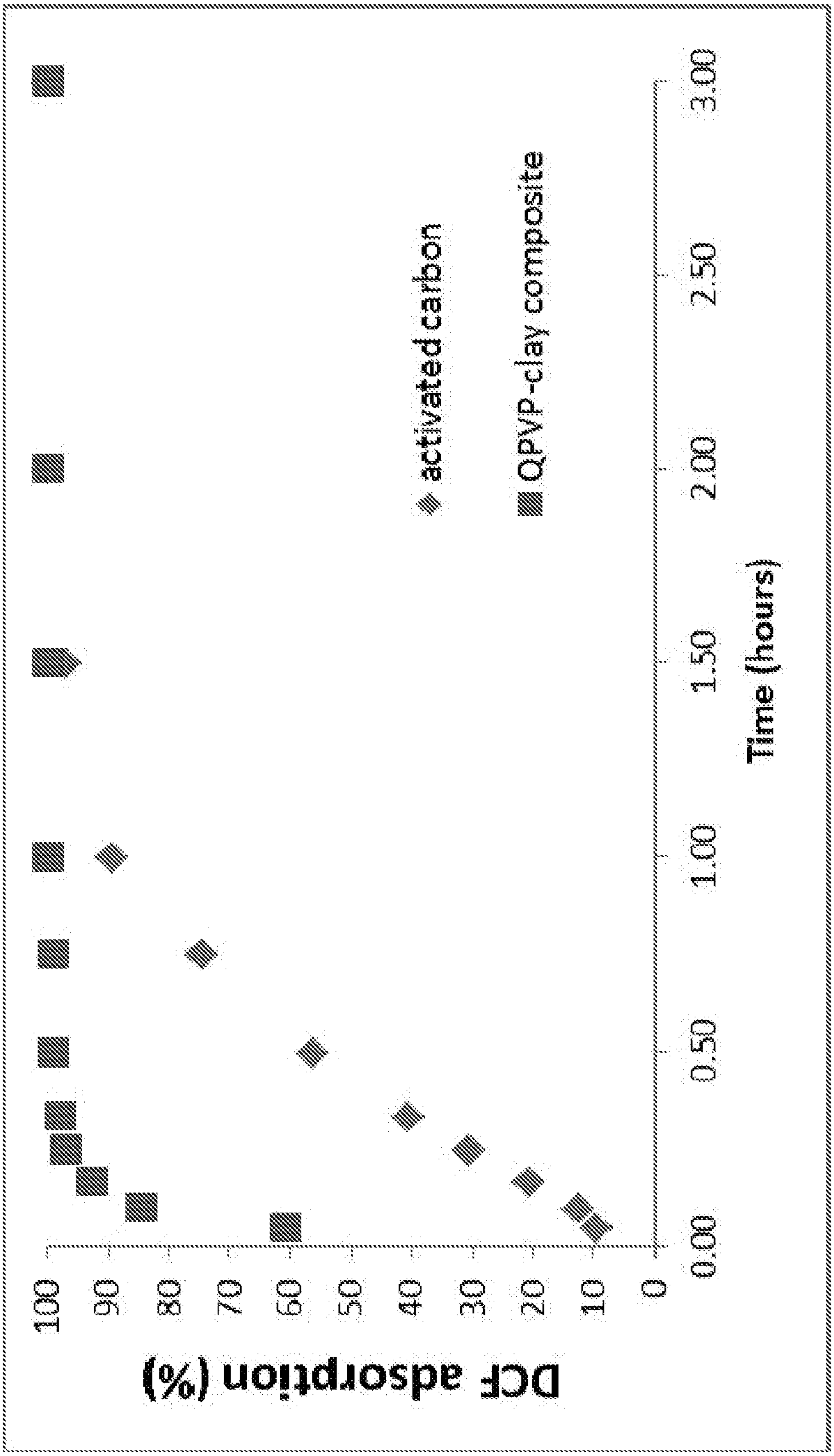
DCF adsorption (%)
100
90
80
70
60
50
40
30
20
10
0
0.00
0.50
1.00
1.50
2.00
2.50
3.00
Time (hours)
activated carbon
QPVP-clay composite

FIG. 7

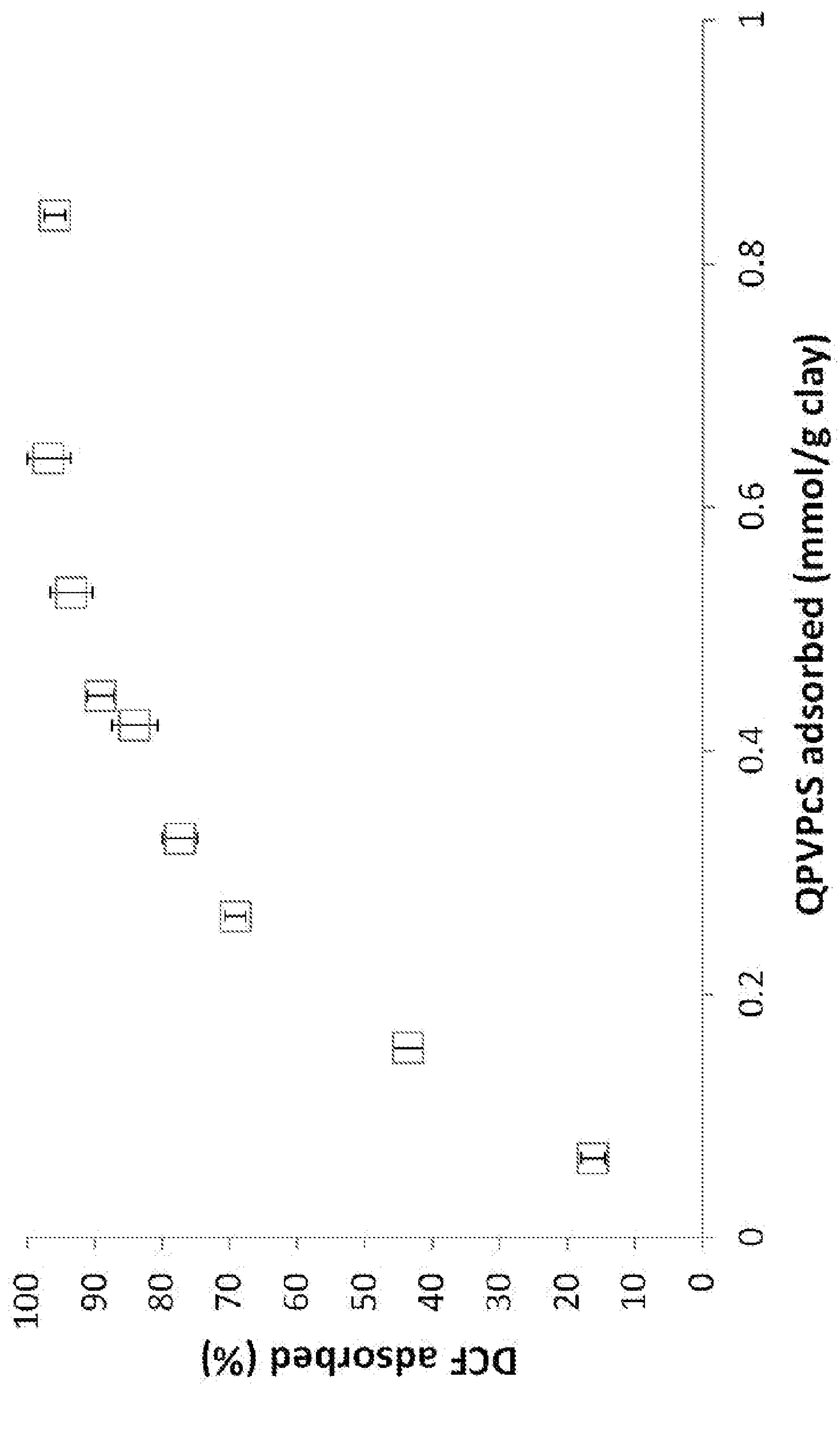
DCF adsorbed (%)
100
90
80
70
60
50
40
30
20
10
0
QPVPcS adsorbed (mmol/g clay)
0
0.2
0.4
0.6
0.8
1

FIG. 8

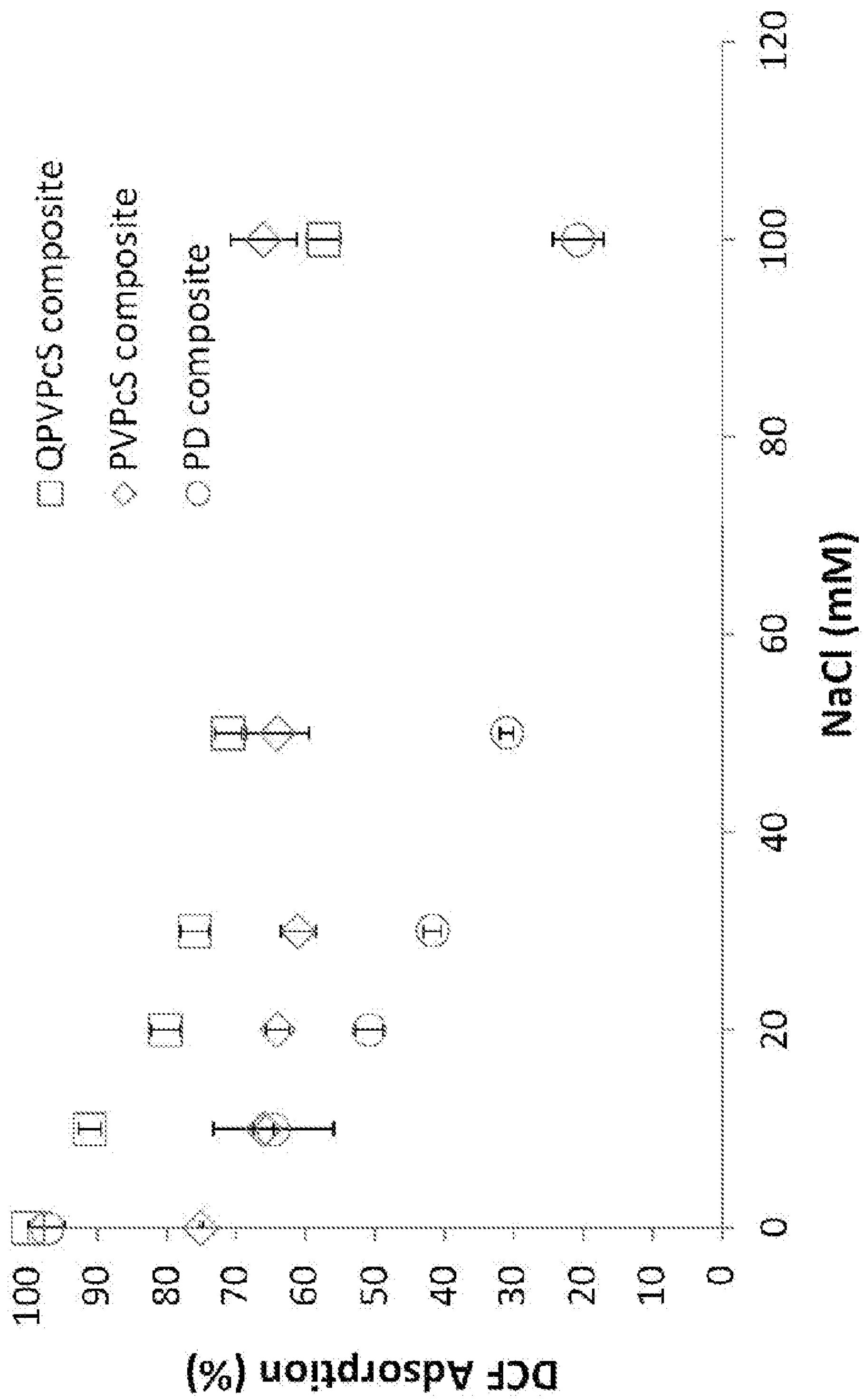
DCF Adsorption (%)
NaCl (mM)
QPVPcS composite
PVPcS composite
PD composite
0
10
20
30
40
50
60
70
80
90
100
0
20
40
60
80
100
120

FIG. 9

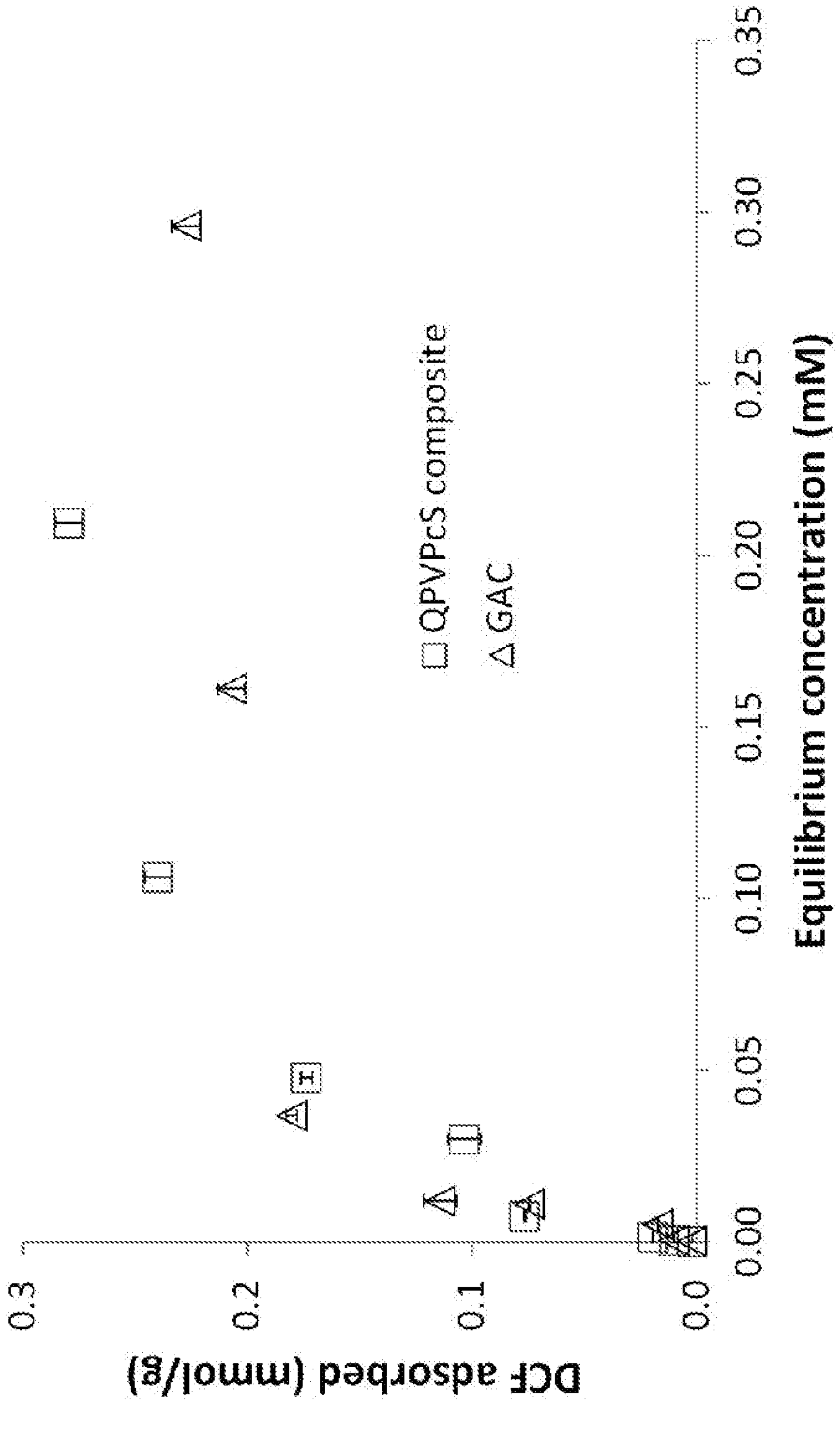
DCF adsorbed (mmol/g)
0.0
0.1
0.2
0.3
Equilibrium concentration (mM)
0.00
0.05
0.10
0.15
0.20
0.25
0.30
0.35
□ QPVPcS composite
△ GAC

FIG. 10

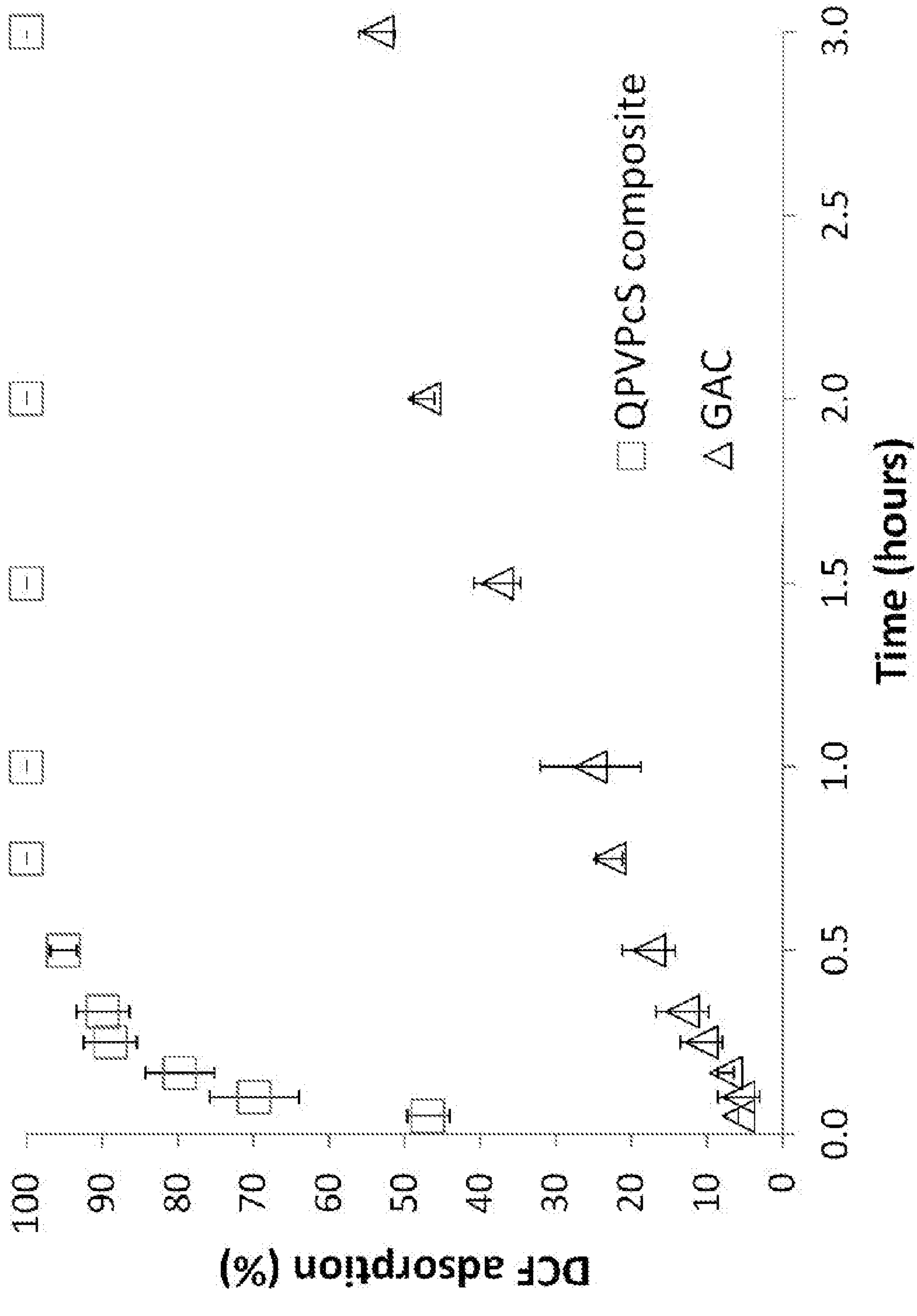

DCF adsorption (%)
100
90
80
70
60
50
40
30
20
10
0
0.0
0.5
1.0
1.5
2.0
2.5
3.0
Time (hours)
QPVPcS composite
GAC


FIG. 11

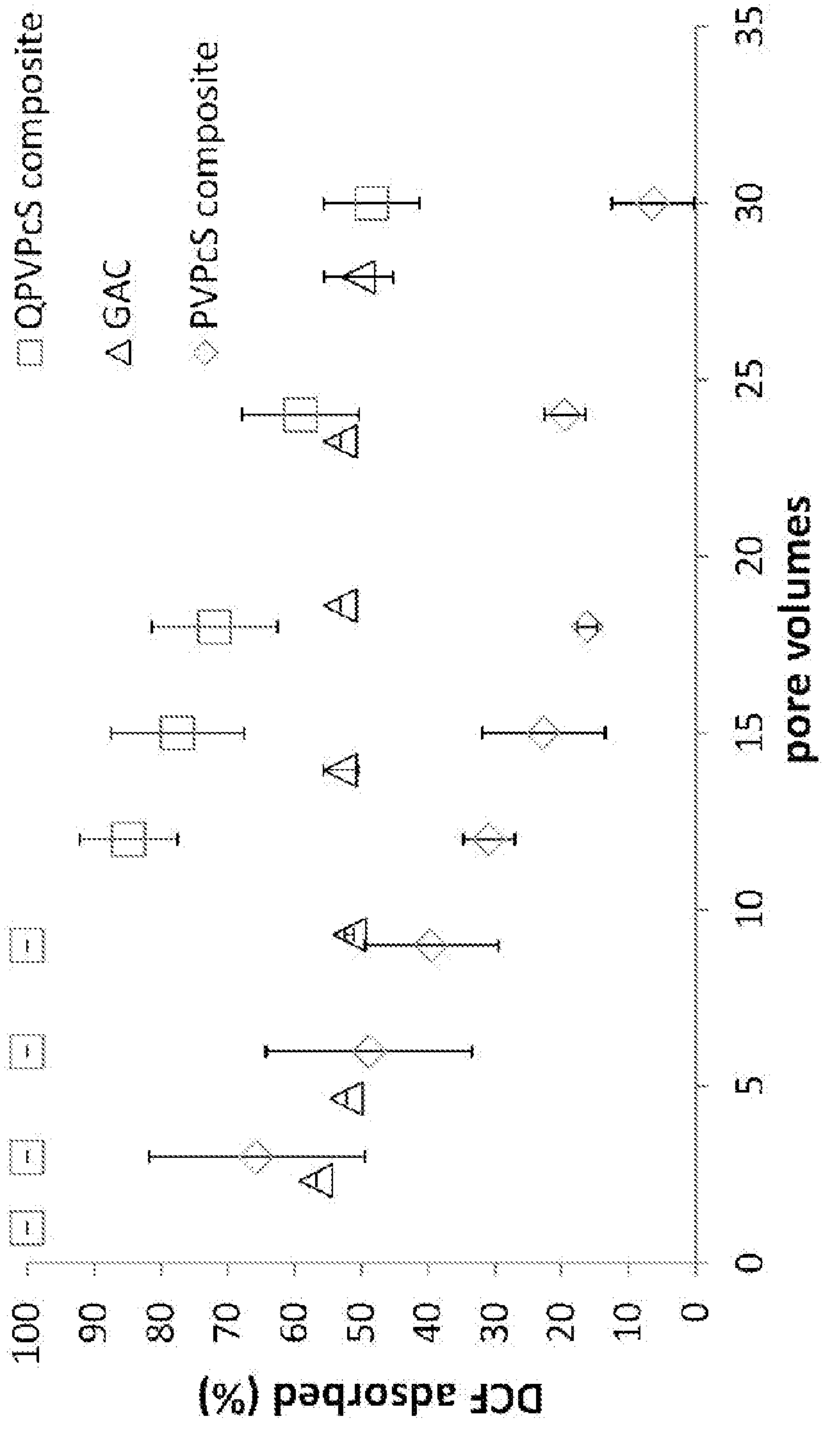
QPVPcS composite
GAC
PVPcS composite
DCF adsorbed (%)
pore volumes
0
10
20
30
40
50
60
70
80
90
100
0
5
10
15
20
25
30
35

FIG. 12

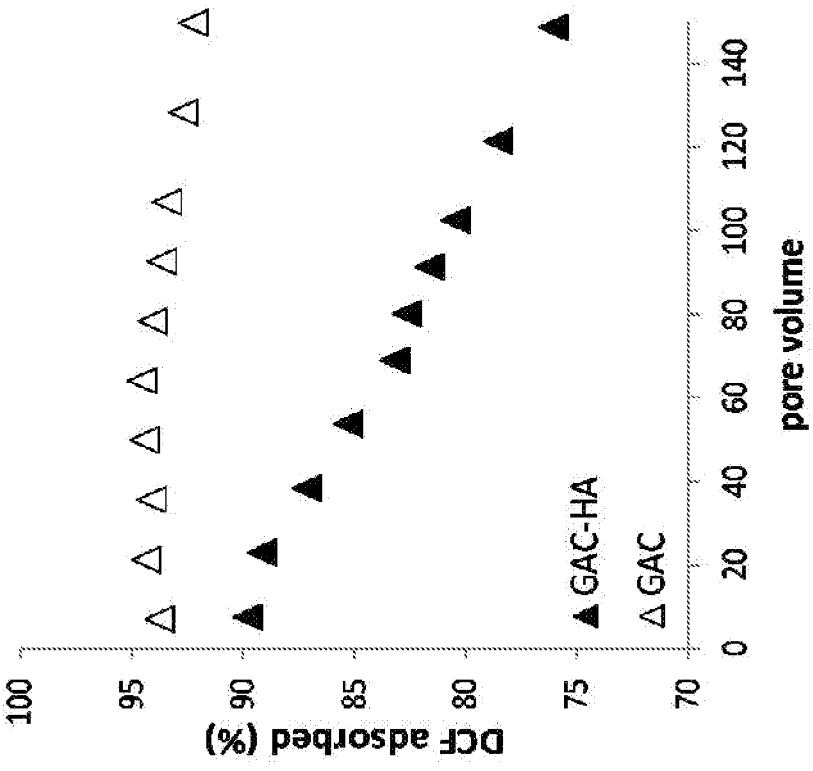


FIG. 13A

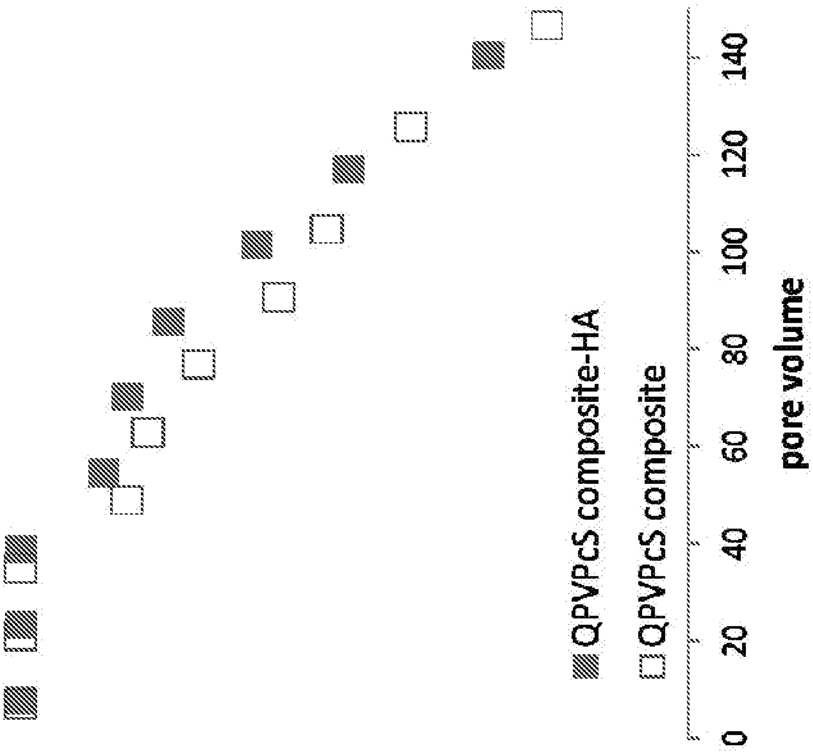


FIG. 13B

FIG. 14A

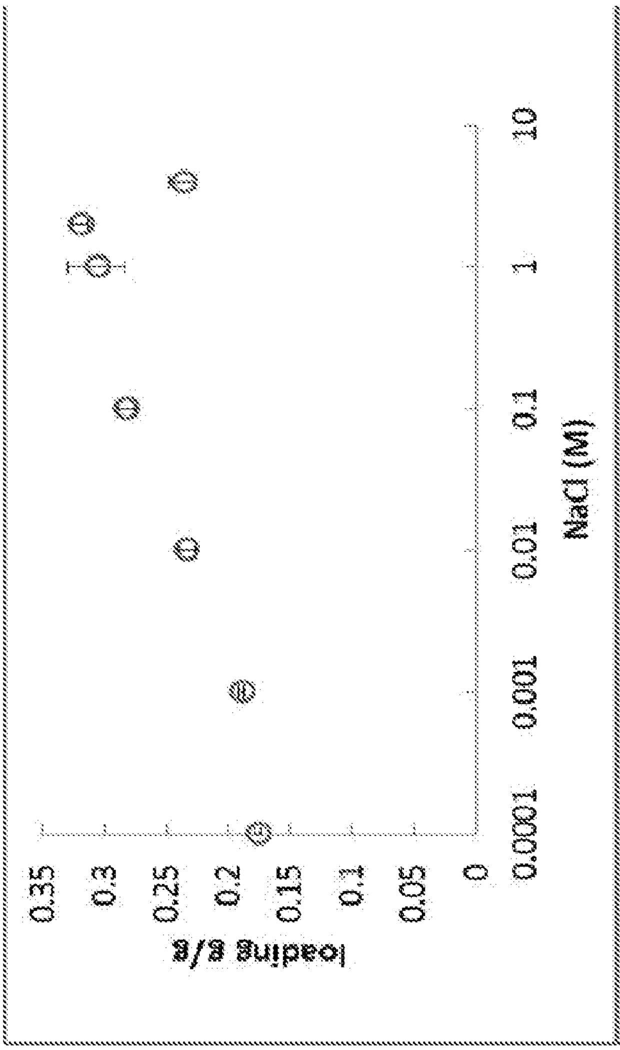


FIG. 14B

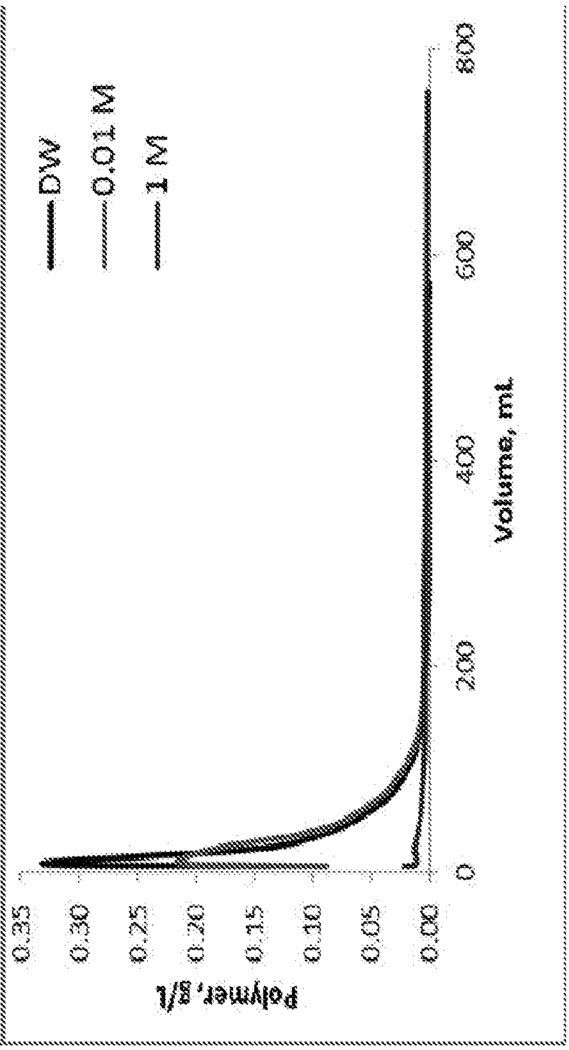

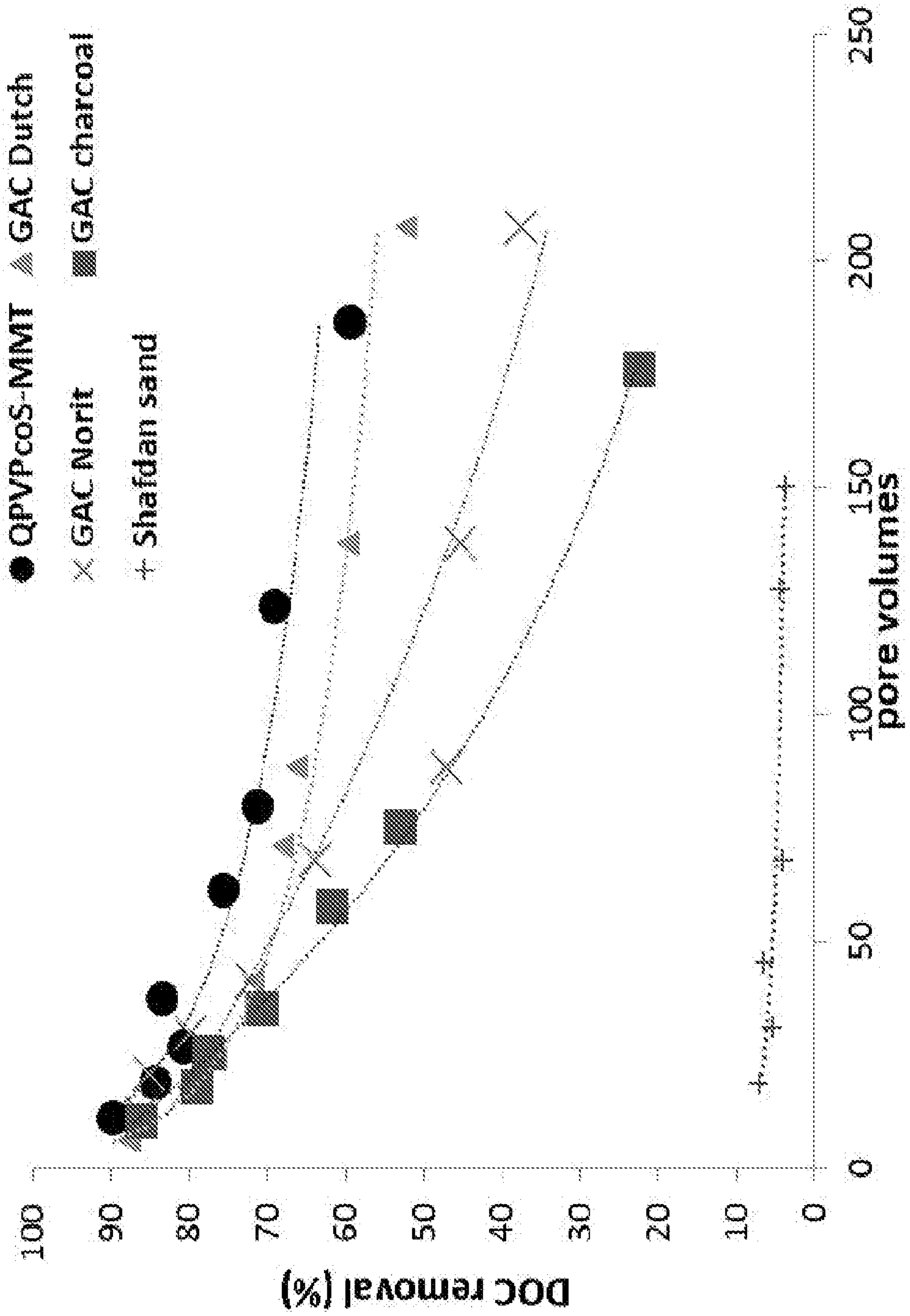
QPVPcoS-MMT
GAC Dutch
GAC Norit
GAC charcoal
Shafdan sand
DOC removal (%)
pore volumes
0
10
20
30
40
50
60
70
80
90
100
0
50
100
150
200
250

FIG. 15

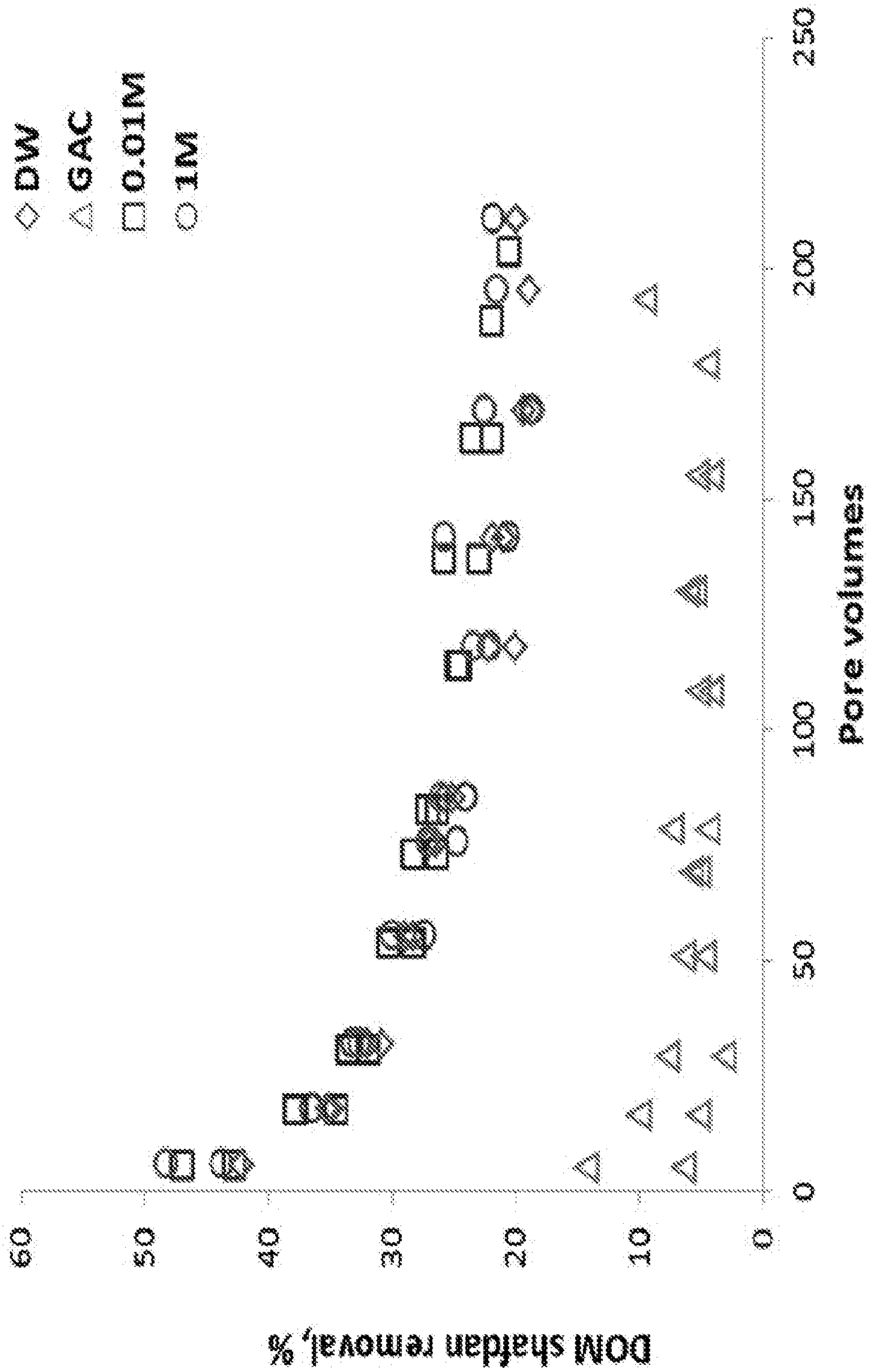
DW
GAC
0.01M
1M
DOM shafdan removal, %
Pore volumes
0
10
20
30
40
50
60
0
50
100
150
200
250

FIG. 16

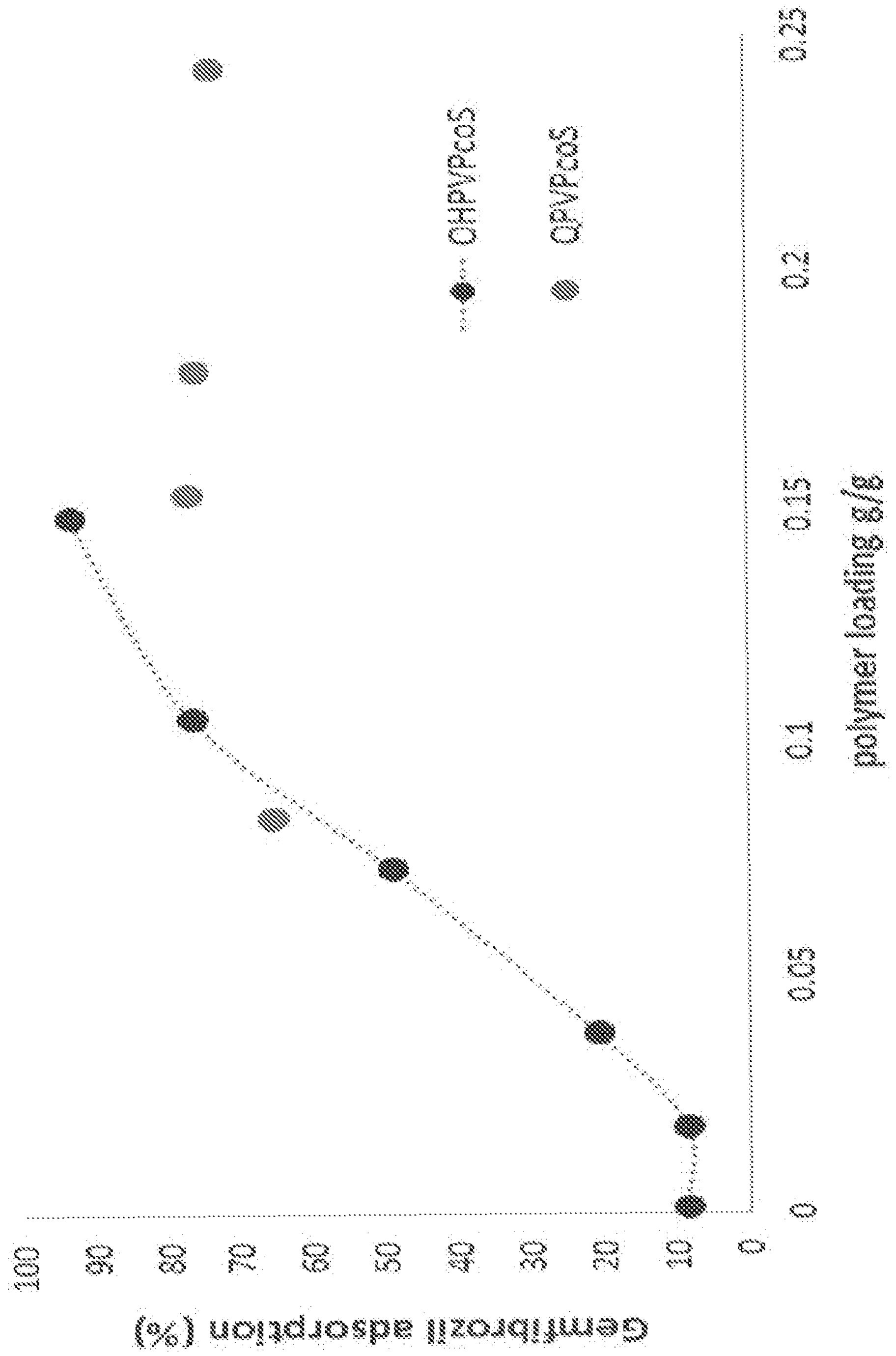
Gemfibrozil adsorption (%)
100
90
80
70
60
50
40
30
20
10
0
0
0.05
0.1
0.15
0.2
0.25
polymer loading g/g
OHPVPcoS
QPVPcoS

FIG. 17

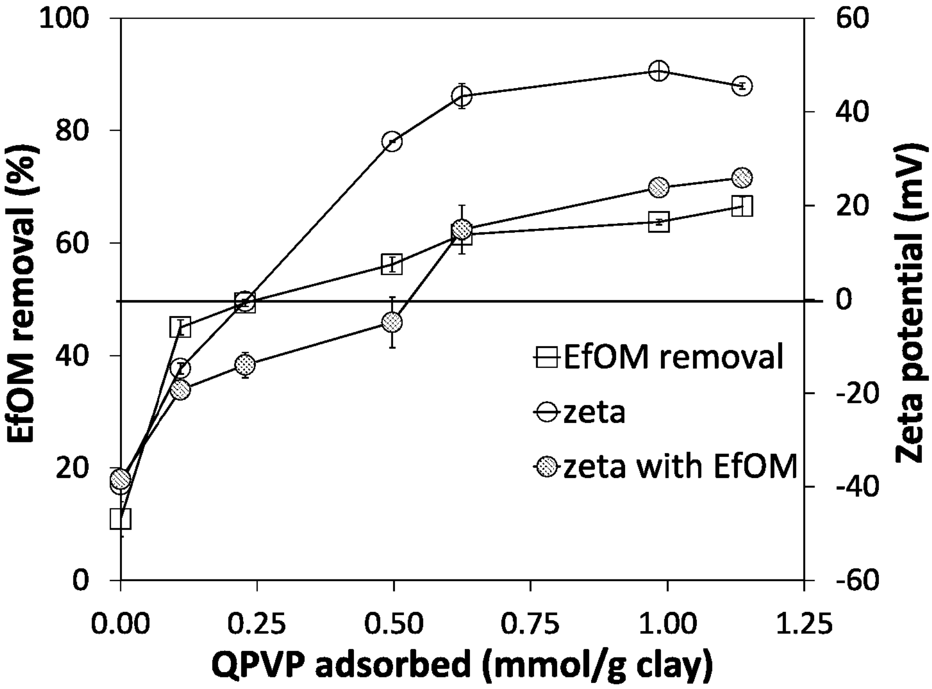


FIG. 18A

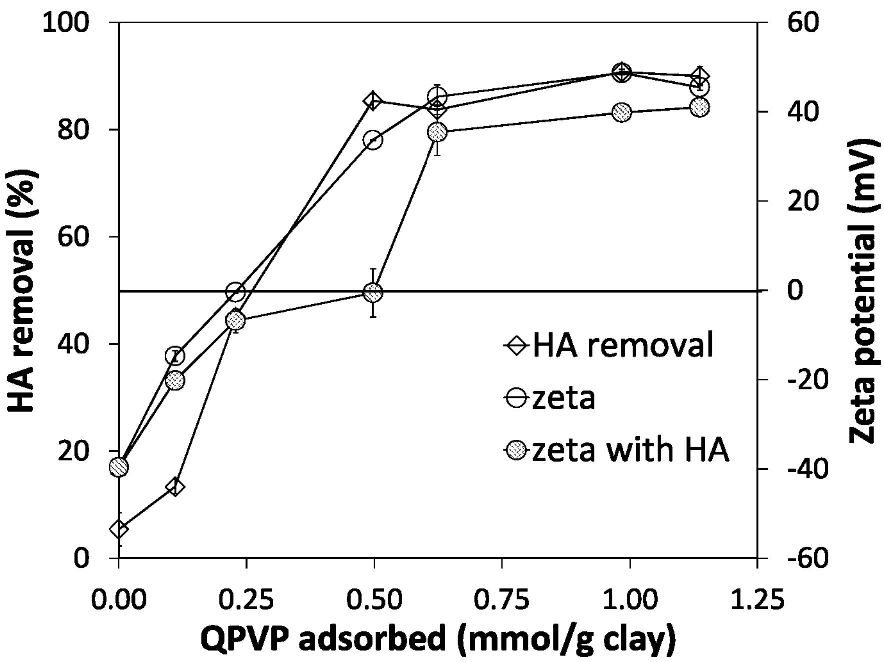


FIG. 18B

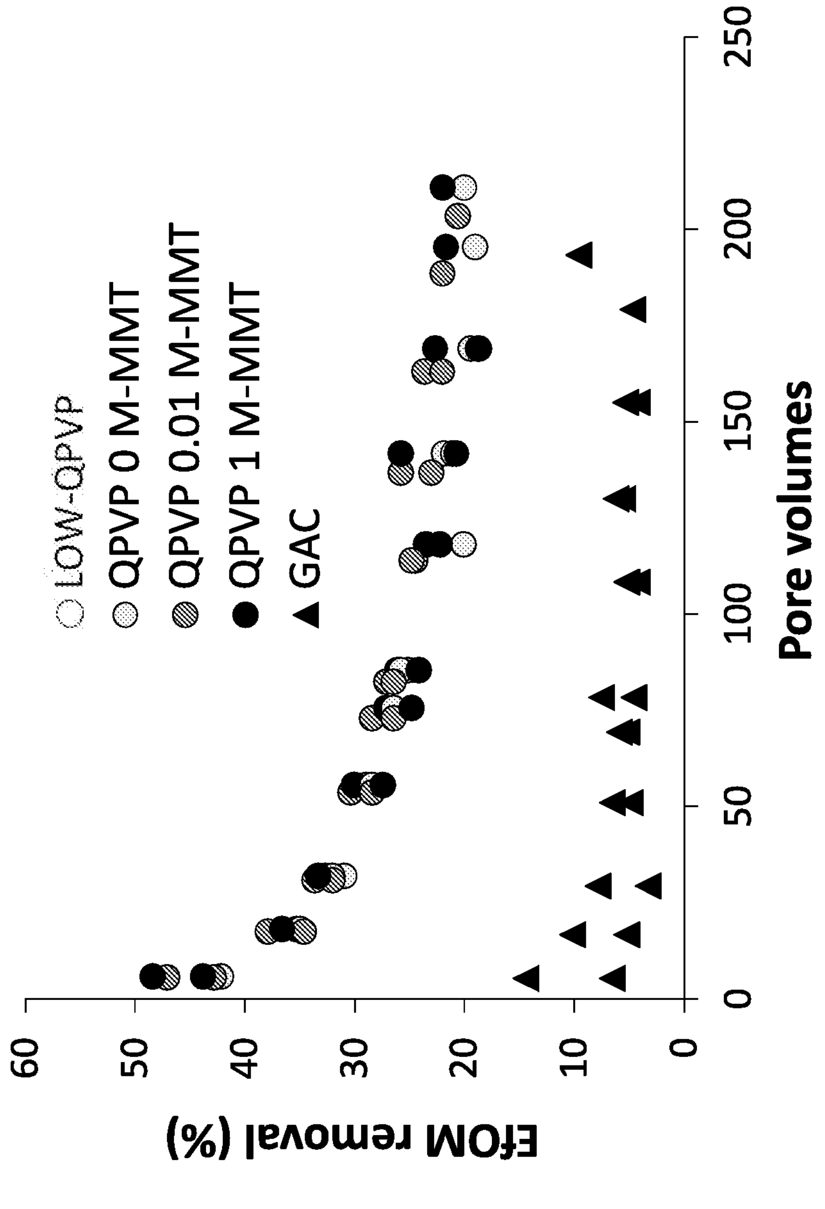
LOW-QPVP
QPVP 0 M-MMT
QPVP 0.01 M-MMT
QPVP 1 M-MMT
GAC
EfOM removal (%)
Pore volumes
0
10
20
30
40
50
60
0
50
100
150
200
250

FIG. 19A

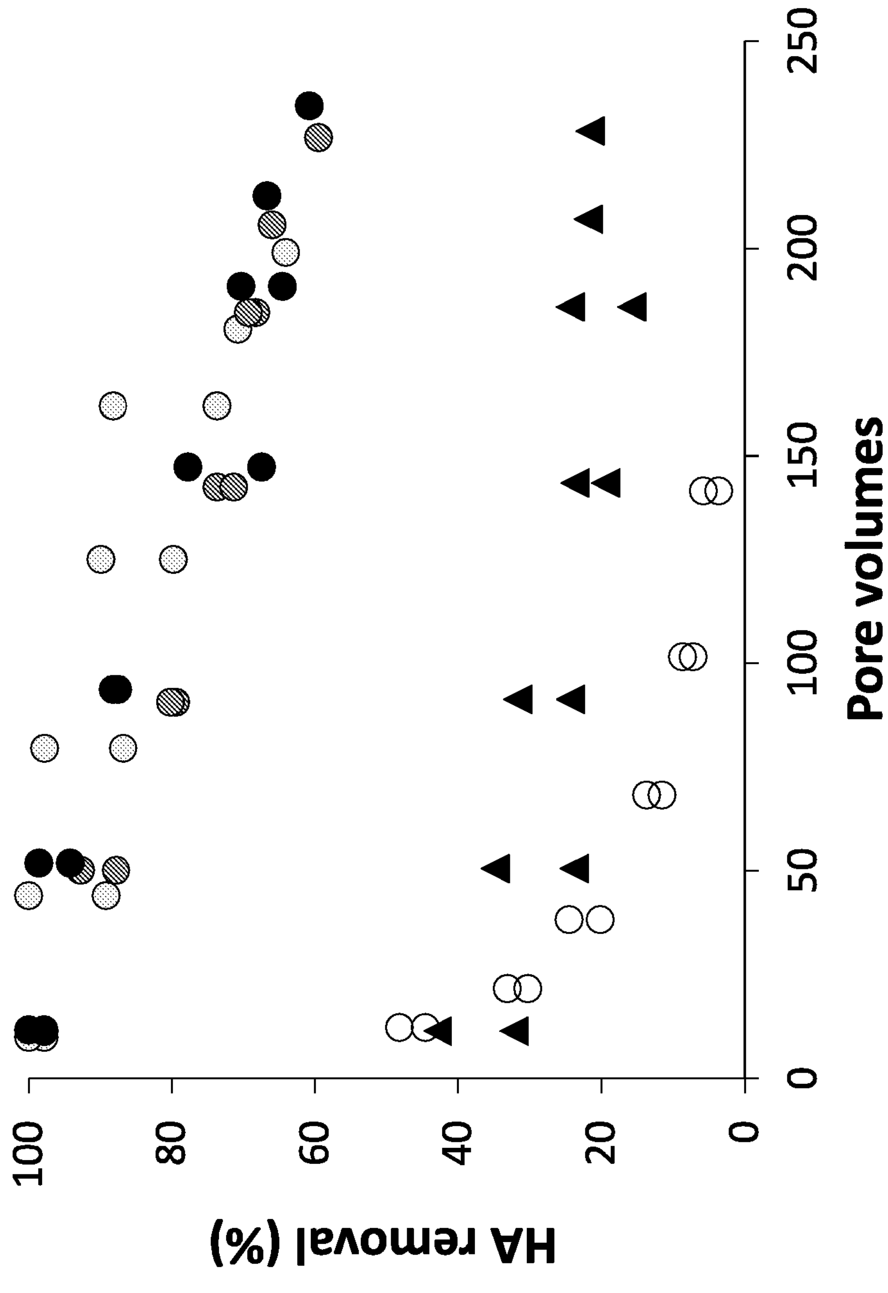


FIG. 19B

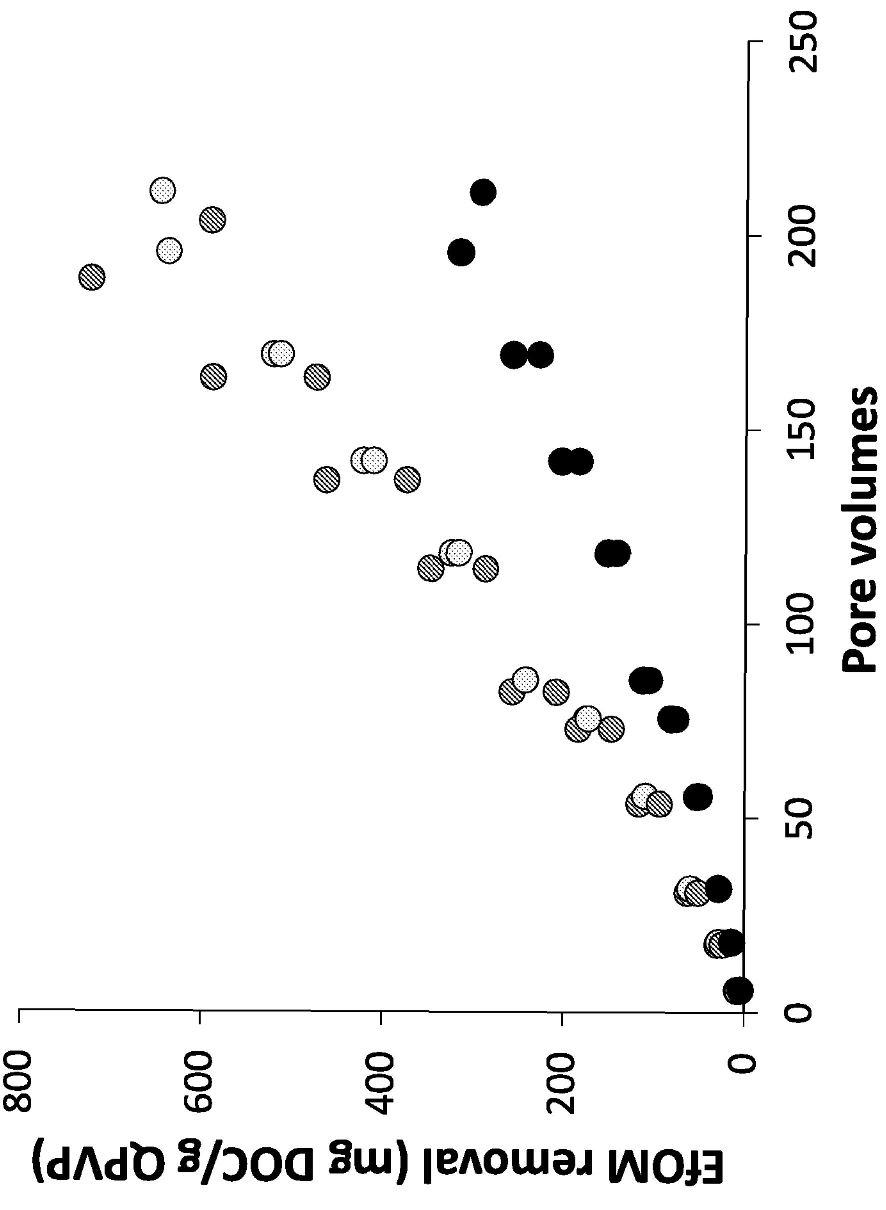
EfOM removal (mg DOC/g QPVP)
0
200
400
600
800
Pore volumes
0
50
100
150
200
250

FIG. 20A

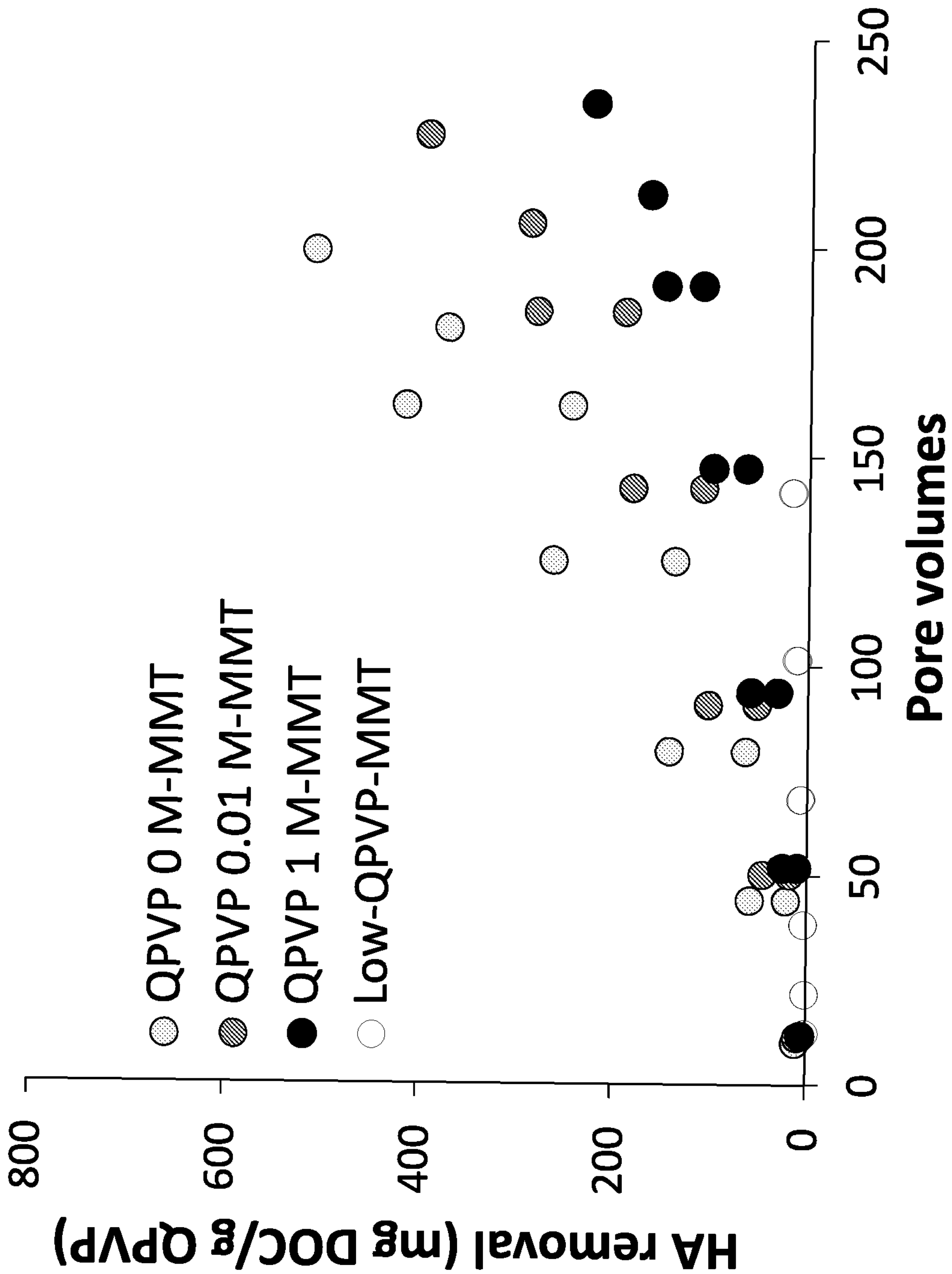
QPVP 0 M-MMT
QPVP 0.01 M-MMT
QPVP 1 M-MMT
Low-QPVP-MMT
HA removal (mg DOC/g QPVP)
800
600
400
200
0
0
50
100
150
200
250
Pore volumes

FIG. 20B

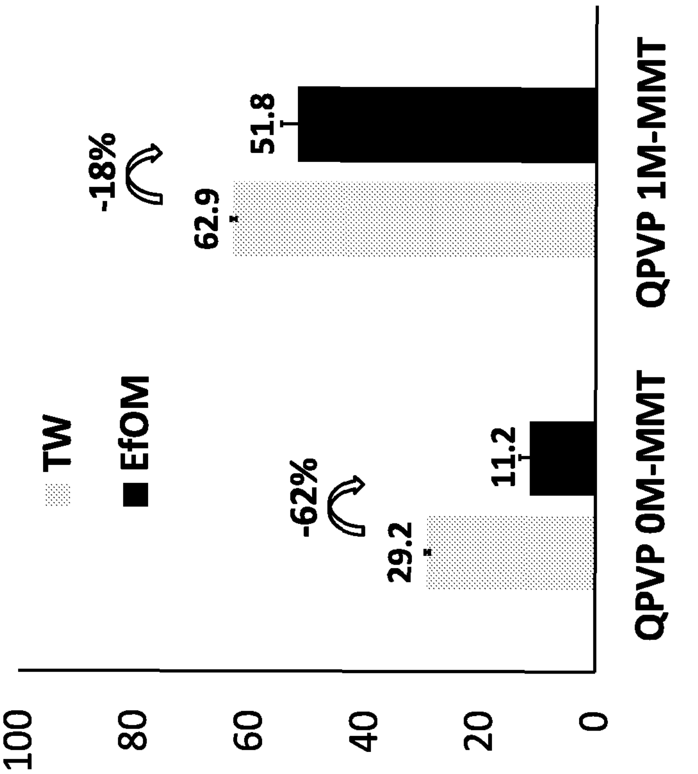


FIG. 21B

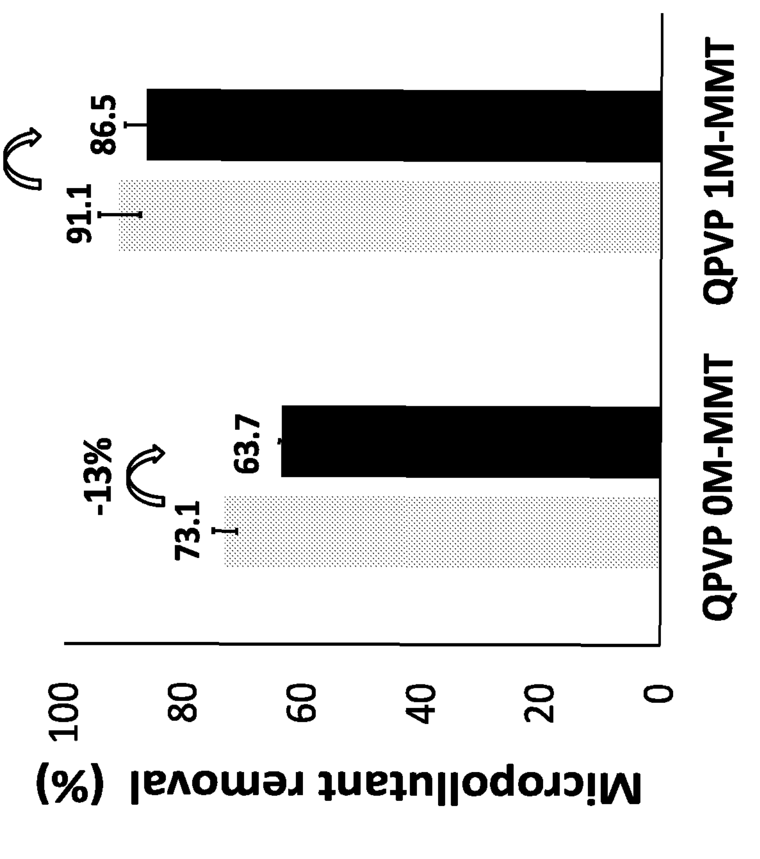


FIG. 21A

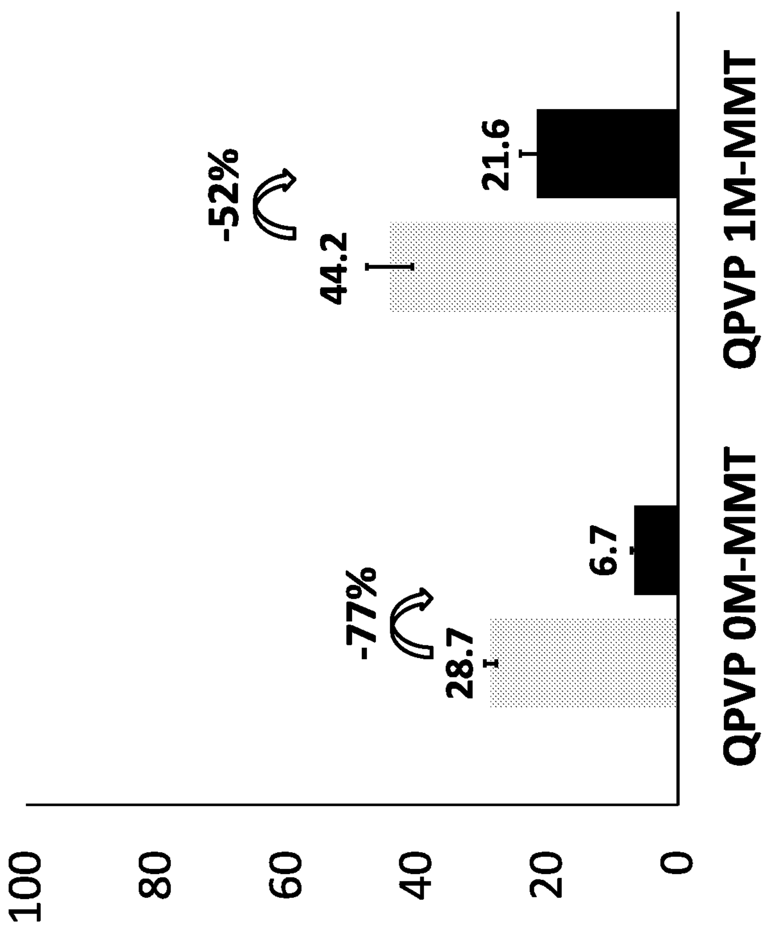


FIG. 21C

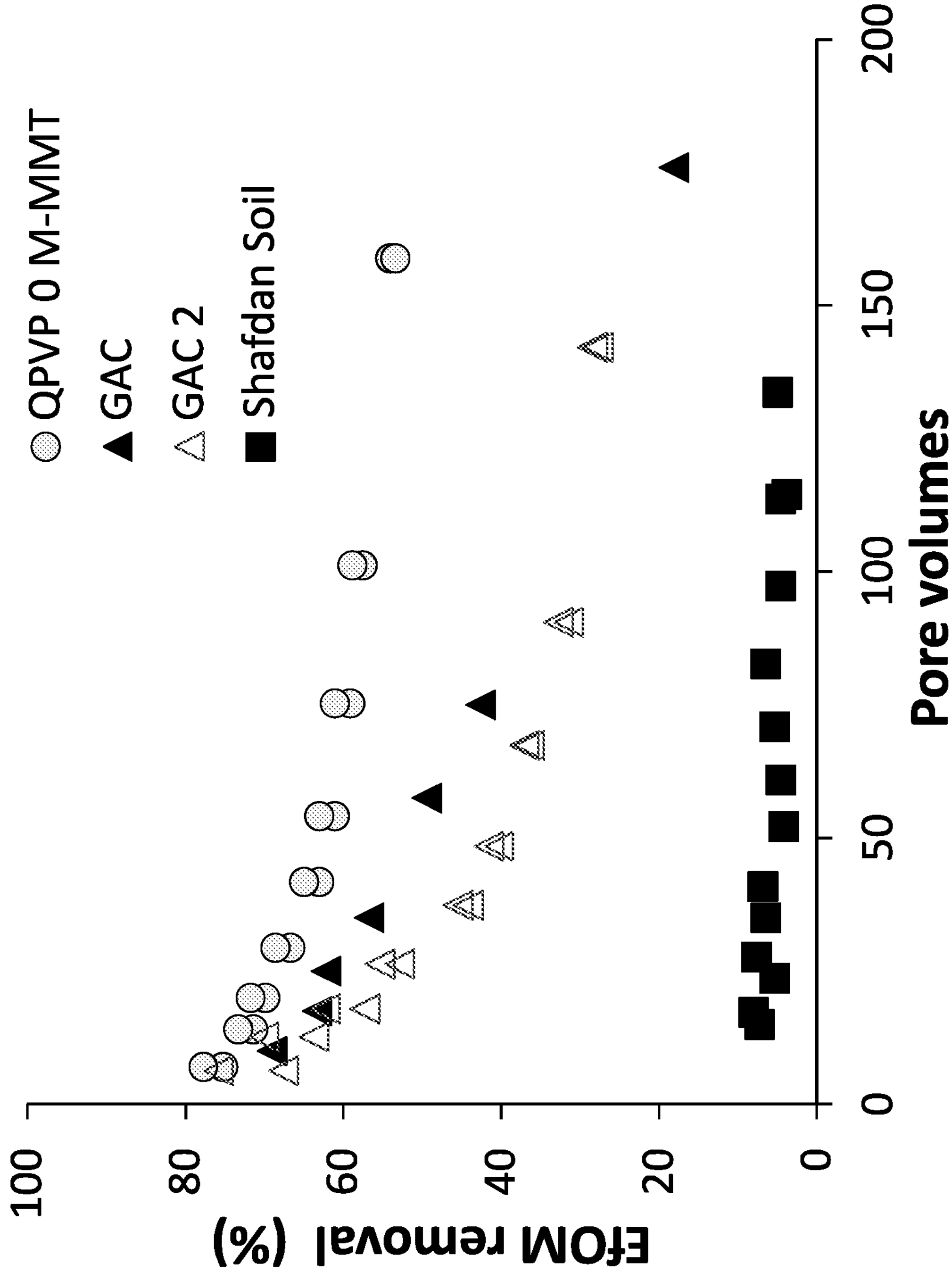
QPVP 0 M-MMT
GAC
GAC 2
Shafdan Soil
EfOM removal (%)
Pore volumes
0
20
40
60
80
100
0
50
100
150
200

FIG. 22

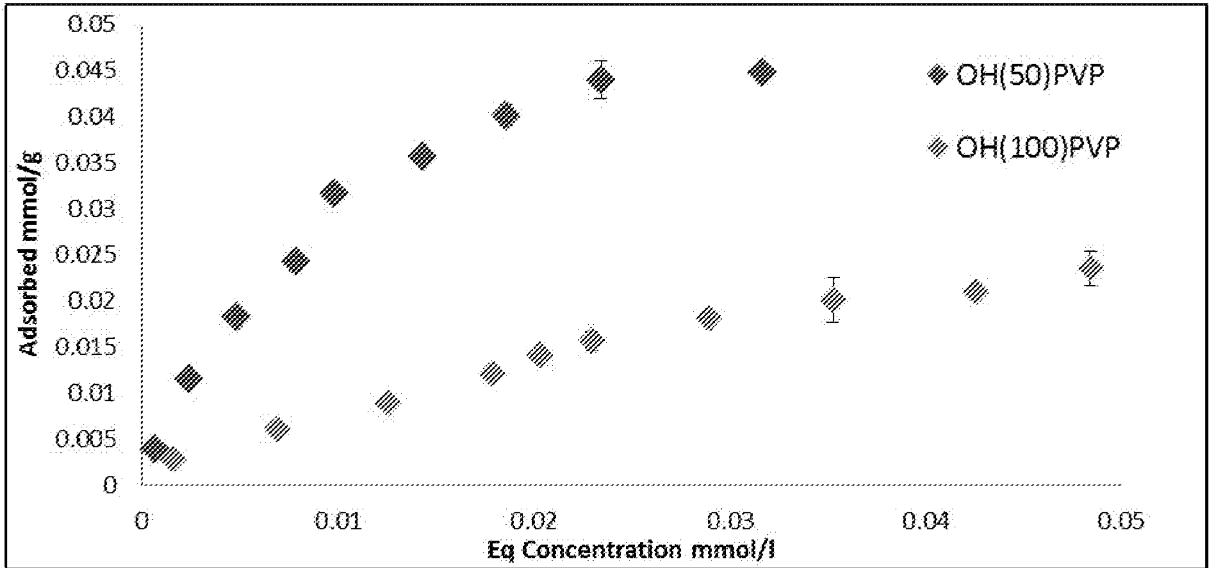


FIG. 23A

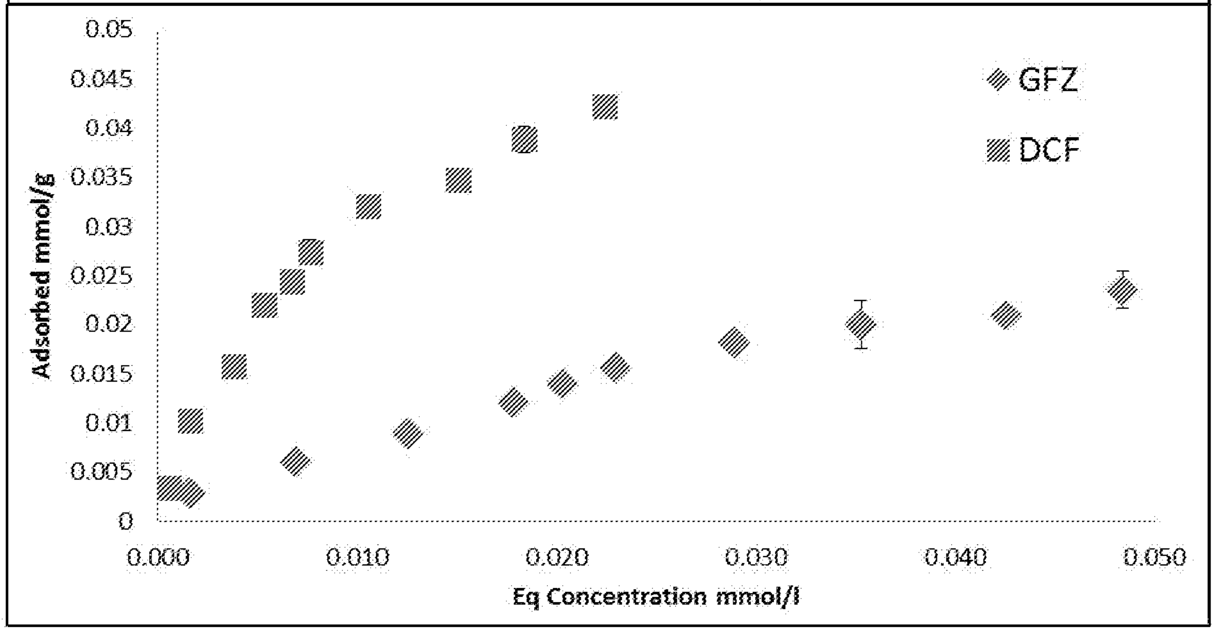


FIG. 23B

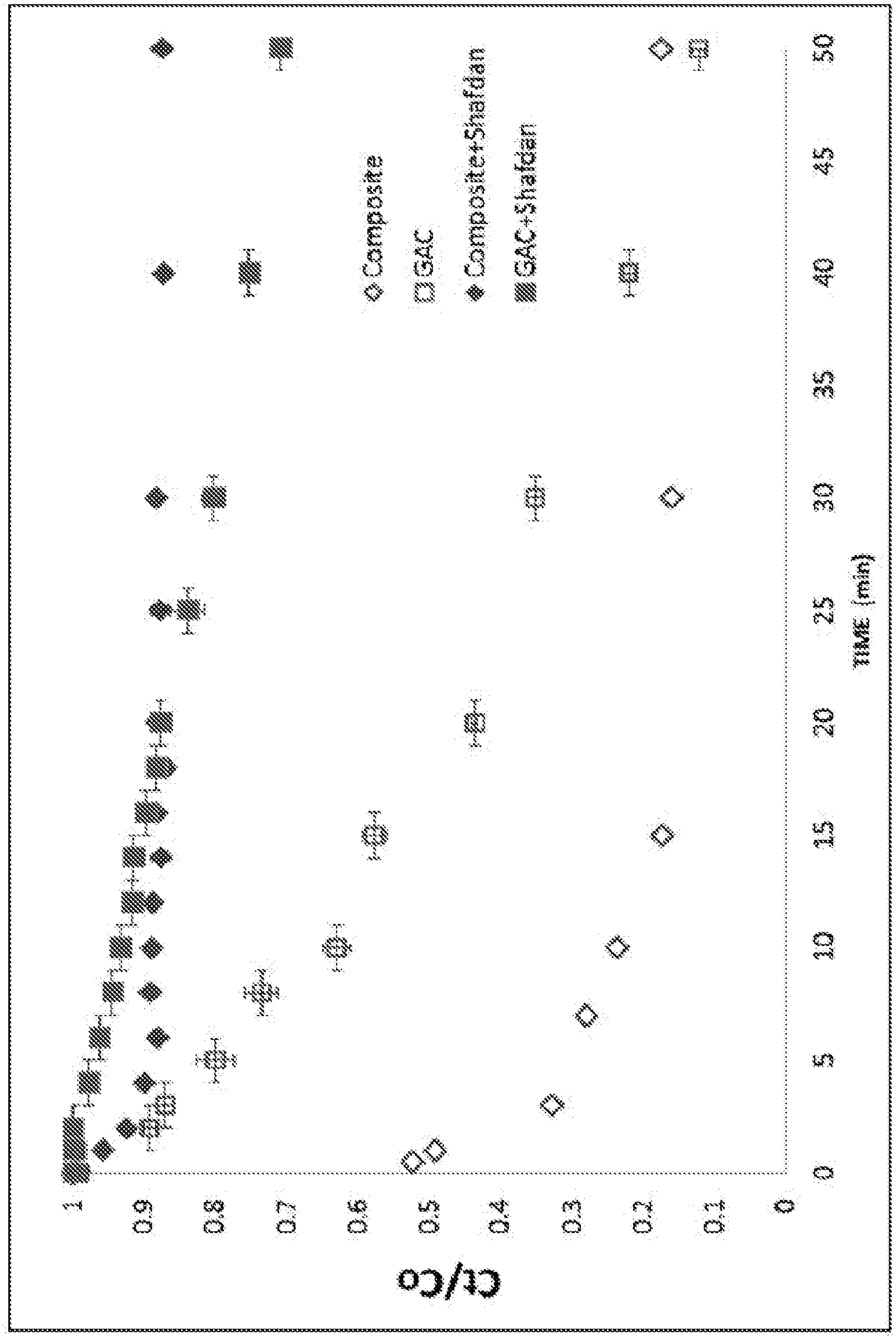
Ct/Co
1
0.9
0.8
0.7
0.6
0.5
0.4
0.3
0.2
0.1
0
0
5
10
15
20
25
30
35
40
45
50
TIME (min)
Composite
GAC
Composite+Shafdan
GAC+Shafdan

FIG. 24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62137896
- US 2010216908 A


### Non-patent literature cited in the description


- Journal of Colloid and Interface Science. Academic Press, vol. 402, 327-333
- **SAHINER NURETTIN.** *Environmental Science & Technology,* vol. 46 (11), 6228-6235
- Colloids and Surfaces A. *Physicachemical and Engineering Aspects,* vol. 381 (1-3), 74-84
- **ISHIZU, K. et al.** *Die Makromol. Chemie,* 1982, vol. 183, 3099-3107, http://www.polymersource.com/dataSheet/P3192-S4VPQ.pdf
- **LI, G. et al.** *J. Appl. Polym. Sci.,* 1996, vol. 62, 2247
- **SINGH, P. K. et al.** *Synth. Met.,* 2010, vol. 160, 950
- **FOURNARIS, K. G. et al.** *Chem. Mater.,* 1999, vol. 11, 2372
- **NIR, S. et al.** *Environ. Sci. Technol.,* 2000, vol. 34, 1269
- **UNDABEYTIA, T. et al.** *Water Res.,* 2008, vol. 42, 1211
- **NIR, S. et al.** *Eng. Asp.,* 1994, vol. 89, 45